(19) Europäisches Patentamt / European Patent Office / Office européen des brevets

(11) **EP 4 195 843 A1**

## (12) EUROPEAN PATENT APPLICATION
published in accordance with Art. 153(4) EPC

(43) Date of publication:
**14.06.2023 Bulletin 2023/24**

(21) Application number: **21852900.6**

(22) Date of filing: **02.08.2021**

(51) International Patent Classification (IPC):
***H04W 72/12*** *(2023.01)*

(86) International application number:
**PCT/CN2021/110037**

(87) International publication number:
**WO 2022/028360 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2020 CN 202010790886**

(71) Applicant: **ZTE Corporation**
**Shenzhen, Guangdong 518057 (CN)**

(72) Inventors:
• **XIAO, Kai**
**Shenzhen, Guangdong 518057 (CN)**
• **SHI, Jing**
**Shenzhen, Guangdong 518057 (CN)**
• **HAO, Peng**
**Shenzhen, Guangdong 518057 (CN)**
• **WEI, Xingguang**
**Shenzhen, Guangdong 518057 (CN)**
• **LIU, Xing**
**Shenzhen, Guangdong 518057 (CN)**

(74) Representative: **Tiburzi, Andrea et al**
**Barzanò & Zanardo Roma S.p.A.**
**Via Piemonte 26**
**00187 Roma (IT)**

(54) **CONTROL SIGNALING TRANSMISSION METHOD, CONTROL SIGNALING ACQUISITION METHOD, DEVICE AND STORAGE MEDIUM**

(57) The present application discloses a control signaling transmission method, a control signaling acquisition method, a device and a storage medium. The control signaling transmission method comprises: a first communication node sending first control information to a second communication node, the first control information comprising at least one downlink control information (DCI) sub-domain, and the at least one DCI sub-domain containing priority information.

A first communication node sends first control information to a second communication node, where the first control information includes at least one downlink control information (DCI) sub-field, and the at least one DCI sub-field includes priority information — S110

**FIG. 1**

EP 4 195 843 A1

## Description

This application claims priority to Chinese Patent Application No. 202010790886.X filed with the China National Intellectual Property Administration (CNIPA) on Aug. 7, 2020, the disclosure of which is incorporated herein by reference in its entirety.

TECHNICAL FIELD

The present application relates to wireless communication networks, for example, a control signaling transmission method, a control signaling acquisition method, a device and a storage medium.

BACKGROUND

With the constant development of wireless communication networks, wireless communication has played an increasingly important role in people's lives. Currently, the 5th Generation (5G) mobile communication technology has been able to support a next generation NodeB (gNB) to simultaneously schedule two physical downlink shared channels (PDSCHs) or physical uplink shared channels (PUSCHs) located at two component carriers (CCs) through two pieces of downlink control information (DCI), thereby increasing system throughput. However, two PDSCHs or PUSCHs are simultaneously scheduled by two pieces of DCI, resulting in the increase of the number of pieces of DCI in a system cell, causing blockage of a physical downlink control channel (PDCCH) carrying the DCI. To prevent such case, a solution of scheduling two PDSCHs or PUSCHs located in different cells by one piece of DCI is proposed in the art. However, this solution is not mature at present, resulting in problems such as resource waste and performance degradation caused by the oversized DCI.

SUMMARY

The present application provides a control signaling transmission method, a control signaling acquisition method, a device and a storage medium so that control signaling transmission can be achieved, overhead of a communication device can be reduced, and system performance can be improved.

An embodiment of the present application provides a control signaling transmission method. The method includes the following.

A first communication node sends first control information to a second communication node, where the first control information includes at least one downlink control information (DCI) sub-field, and the at least one DCI sub-field includes priority information.

An embodiment of the present application provides a control signaling transmission method. The method includes the following.

A second communication node receives first control information sent by a first communication node, where the first control information includes at least one downlink control information (DCI) sub-field, and the at least one DCI sub-field includes priority information.

An embodiment of the present application provides a control signaling transmission method. The method includes the following.

A first communication node determines a threshold value.

The first communication node determines second control information according to the threshold value, where the second control information includes at least one downlink control information (DCI) sub-field.

The first communication node sends the second control information to a second communication node.

An embodiment of the present application provides a control signaling acquisition method. The method includes the following.

A third communication node determines a scheduling mode of third control information, where the scheduling mode includes a mode in which the third control information schedules one cell or a mode in which the third control information schedules at least two cells.

An embodiment of the present application provides a device. The device includes a processor. The processor is configured to perform the method according to any of the preceding embodiments when executing a computer program.

An embodiment of the present application further provides a computer-readable storage medium storing a computer program, where the computer program, when executed by a processor, causes the processor to perform the method according to any of the preceding embodiments.

BRIEF DESCRIPTION OF DRAWINGS

FIG. 1 is a flowchart of a control signaling transmission method according to an embodiment;
FIG. 2 is a flowchart of another control signaling transmission method according to an embodiment;
FIG. 3 is a flowchart of another control signaling transmission method according to an embodiment;
FIG. 4 is a flowchart of a control signaling acquisition method according to an embodiment;
FIG. 5 is a structural diagram of a control signaling transmission apparatus according to an embodiment;
FIG. 6 is a structural diagram of another control signaling transmission apparatus according to an embodiment;
FIG. 7 is a structural diagram of another control signaling transmission apparatus according to an embodiment;
FIG. 8 is a structural diagram of a control signaling acquisition apparatus according to an embodiment;
FIG. 9 is a structural diagram of a base station according to an embodiment; and
FIG. 10 is a structural diagram of a UE according to an embodiment.

DETAILED DESCRIPTION

Embodiments of the present application will be described hereinafter in detail with reference to the drawings.
The maturity of the 5G technology further supports three application scenarios of enhanced mobile broadband, high reliability and ultra-low delay communications, and large scale machine communications. In terms of system performance, the 5G technology has key capability indicators such as a peak rate of 10 to 20 gigabits per second (Gbit/s), a connection density of 1 million connections per square kilometer, an air interface (AI) delay of 1 millisecond (ms), mobility support of 500 kilometers per hour (km/h), and a flow density of 10 megabits per second (Mbit/s) per square meter. Currently, the 5G technology has been able to support a gNB to simultaneously schedule two PDSCHs or PUSCHs located at two CCs through two pieces of DCI, thereby increasing system throughput. However, two PDSCHs or PUSCHs are simultaneously scheduled by two pieces of DCI, resulting in the increase of the number of pieces of DCI in a system cell, causing blockage of a PDCCH carrying the DCI.
To prevent such case, a solution of scheduling two PDSCHs or PUSCHs located in different cells by one piece of DCI is proposed in the art, so as to reduce the number of pieces of DCI transmitted in the system cell and a blockage rate of the PDCCH. However, in this solution, since one piece of DCI needs to schedule two PDSCHs or PUSCHs, the DCI needs to simultaneously carry information of two CCs. In this manner, while the amount of carried information is increased, a data size of the new DCI is increased, resulting in problems such as resource waste and performance degradation caused by the oversized DCI.
An embodiment of the present application provides a mobile communication network (including but not limited to 5G) whose network architecture may include a terminal device and an access network device. The terminal device is wirelessly connected to the access network device, and the terminal device may be fixed or movable. The embodiments of the present application provide a control signaling transmission method, a control signaling acquisition method, a device and a storage medium that are operable on the network architecture so that control signaling transmission can be achieved, overhead of a communication device can be reduced, and system performance can be improved.
The access network device is an access device to which the terminal device is wirelessly accessed to in a mobile communication system and may be a base station, an evolved NodeB (eNodeB), a transmission reception point (TRP), a gNB in the 5G mobile communication system, a base station in a future mobile communication system, an access node in a Wireless Fidelity (Wi-Fi) system, or the like. The access network device may also be a module or unit that performs part of functions of the base station, for example, a central unit (CU) or a distributed unit (DU). The embodiments of the present application do not limit the specific technology and the specific device form used by the access network device. In the present application, the access network device may be referred to as a network device for short, and if not otherwise specified, the network device refers to the access network device.
The terminal device may also be referred to as a terminal, a user equipment (UE), a mobile station, a mobile terminal, or the like. The terminal device may be a mobile phone, a tablet computer, a computer having wireless transceiving functions, a virtual reality (VR) terminal device, an augmented reality (AR) terminal device, a wireless terminal in industrial control, a wireless terminal in self-driving, a wireless terminal in telesurgery, a wireless terminal in a smart grid, a wireless terminal in transportation safety, a wireless terminal in a smart city, and a wireless terminal in smart home. The embodiments of the present application do not limit the specific technology and the specific device form used by the terminal device.
A control signaling transmission method, a control signaling acquisition method, a device and a storage medium, as well as technical effects thereof are described below.

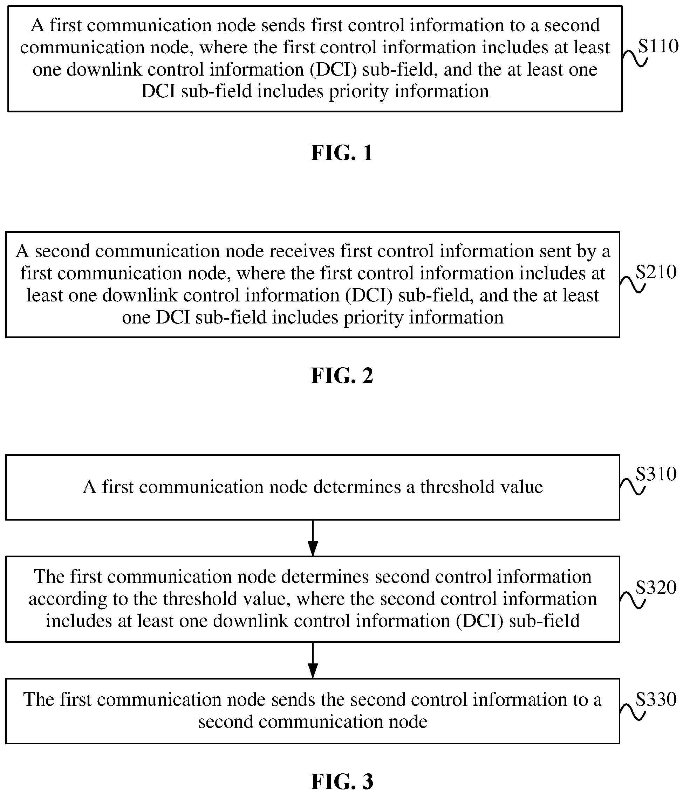

FIG. 1 is a flowchart of a control signaling transmission method according to an embodiment. As shown in FIG. 1, the method provided in this embodiment is applicable to a first communication node (such as the access network device). The method includes the following.

In S 110, a first communication node sends first control information to a second communication node, where the first control information includes at least one downlink control information (DCI) sub-field, and the at least one DCI sub-field includes priority information.

In an embodiment, the first control information may be DCI carried by a PDCCH located in a primary cell (PCell) or a secondary cell (SCell) for scheduling PDSCHs or PUSCHs located in at least two cells. Data transmission in the at least two cells is carried by multiple CCs.

The first control information includes at least one DCI sub-field, and the priority information of the at least one DCI sub-field may be determined by at least one of the five methods described below.

In method one, the priority information of the at least one DCI sub-field is determined by the first communication node according to a pre-definition in the protocol.

In method two, the priority information of the at least one DCI sub-field is configured by the first communication node according to radio resource control (RRC) signaling.

In method three, the priority information of the at least one DCI sub-field located in a same functional group is determined according to priority information of the functional group, where the priority information of the functional group is determined by the first communication node according to the pre-definition in the protocol.

In method three, the first communication node divides the at least one DCI sub-field in the DCI into at least one functional group according to the pre-definition in the protocol, where each functional group includes at least one DCI sub-field; and then the first communication node determines a priority of each functional group according to the pre-definition in the protocol, where priority information of DCI sub-fields located in the same functional group is consistent.

In method four, the priority information of the at least one DCI sub-field located in a same functional group is determined according to priority information of the functional group, where the priority information of the functional group is configured by the first communication node according to RRC signaling.

In method four, the first communication node divides the at least one DCI sub-field in the DCI into at least one functional group according to the pre-definition in the protocol, where each functional group includes at least one DCI sub-field; and then the first communication node configures a priority of each functional group according to the RRC signaling, where priority information of DCI sub-fields located in the same functional group is consistent.

In method five, the priority information of the at least one DCI sub-field located in a same functional group is configured by the first communication node according to RRC signaling, and priority information of the functional group is determined by the first communication node according to the pre-definition in the protocol.

In method five, the first communication node divides the at least one DCI sub-field in the DCI into at least one functional group according to the pre-definition in the protocol, where each functional group includes at least one DCI sub-field; and then the first communication node configures a priority of each functional group according to the RRC signaling; finally, the first communication node configures priorities of DCI sub-fields in at least one functional group according to the RRC signaling, where priorities of DCI sub-fields in the same functional group not configured by the RRC signaling are consistent.

In an embodiment, in the preceding methods one to five, the first communication node or the second communication node discards the DCI sub-fields in units of DCI sub-fields with the same priority or configures a shared indication. For example, if a first DCI sub-field and a second DCI sub-field belong to a first functional group and priority information of the first functional group is a first priority, priority information of the first DCI sub-field and priority information of the second DCI sub-field are each the first priority. When the first communication node or the second communication node discards the DCI sub-fields in the first functional group (that is, the DCI sub-fields with the first priority), the first DCI sub-field and the second DCI sub-field are simultaneously discarded or the shared indication is configured.

In an embodiment, in the preceding method three or four, when the DCI sub-fields are divided into several functional groups, the first communication node or the second communication node discards the DCI sub-fields in units of functional groups or configures the shared indication. For example, if a first DCI sub-field and a second DCI sub-field belong to a first functional group and priority information of the first functional group is a first priority, priority information of the first DCI sub-field and priority information of the second DCI sub-field are each the first priority. When the first communication node or the second communication node discards the DCI sub-fields in the first functional group (that is, the DCI sub-fields with the first priority), the first DCI sub-field and the second DCI sub-field are simultaneously discarded or the shared indication is configured.

In an embodiment, when the priorities of the DCI sub-fields are consistent, the first communication node or the second communication node may distinguish the DCI sub-fields according to a configuration order of the DCI sub-fields or a sequence of DCI bits in which the DCI sub-fields are located. For example, if the priority information of the first DCI sub-field and the priority information of the second DCI sub-field are each the first priority and the first DCI sub-field is configured earlier, the first DCI sub-field is discarded first by default or the shared indication is configured.

In an embodiment, the DCI sub-field not configured with the priority information by the pre-definition in the protocol or not configured with the RRC signaling has a highest priority; or the DCI sub-field not configured with the priority information by the pre-definition in the protocol or not configured with the RRC signaling has a lowest priority. For example, if the priority information of the first DCI sub-field and the priority information of the second DCI sub-field are each the first priority and a third DCI sub-field is not configured with the priority information by the pre-definition in the protocol or not configured with the RRC signaling, then the third DCI sub-field has the highest priority by default, that is, the third DCI sub-field has a higher priority than the first DCI sub-field and the second DCI sub-field.

FIG. 2 is a flowchart of another control signaling transmission method according to an embodiment. As shown in FIG. 2, the method provided in this embodiment is applicable to a second communication node (such as the terminal device). The method includes the following.

In S210, a second communication node receives first control information sent by a first communication node, where the first control information includes at least one downlink control information (DCI) sub-field, and the at least one DCI sub-field includes priority information.

In an embodiment, the first control information may be DCI carried by a PDCCH located in a primary cell (PCell) or a secondary cell (SCell) for scheduling PDSCHs or PUSCHs located in at least two cells. Data transmission in the at least two cells is carried by multiple CCs.

The first control information includes at least one DCI sub-field, and the priority information of the at least one DCI sub-field may be determined by at least one of the five methods described below.

In method one, the priority information of the at least one DCI sub-field is determined by the first communication node according to pre-definition in the protocol.

In method two, the priority information of the at least one DCI sub-field is configured by the first communication node according to radio resource control (RRC) signaling.

In method three, the priority information of the at least one DCI sub-field located in a same functional group is determined according to priority information of the functional group, where the priority information of the functional group is determined by the first communication node according to pre-definition in the protocol.

In method three, the first communication node divides the at least one DCI sub-field in the DCI into at least one functional group according to the pre-definition in the protocol, where each functional group includes at least one DCI sub-field; and then the first communication node determines a priority of each functional group according to the pre-definition in the protocol, where priority information of DCI sub-fields located in the same functional group is consistent.

In method four, the priority information of the at least one DCI sub-field located in a same functional group is determined according to priority information of the functional group, where the priority information of the functional group is configured by the first communication node according to RRC signaling.

In method four, the first communication node divides the at least one DCI sub-field in the DCI into at least one functional group according to the pre-definition in the protocol, where each functional group includes at least one DCI sub-field; and then the first communication node configures a priority of each functional group according to the RRC signaling, where priority information of DCI sub-fields located in the same functional group is consistent.

In method five, the priority information of the at least one DCI sub-field located in a same functional group is configured by the first communication node according to RRC signaling, and priority information of the functional group is determined by the first communication node according to pre-definition in the protocol.

In method five, the first communication node divides the at least one DCI sub-field in the DCI into at least one functional group according to the pre-definition in the protocol, where each functional group includes at least one DCI sub-field; and then the first communication node configures a priority of each functional group according to the RRC signaling; finally, the first communication node configures priorities of DCI sub-fields in at least one functional group according to the RRC signaling, where priorities of DCI sub-fields in the same functional group not configured by the RRC signaling are consistent.

In an embodiment, in the preceding methods one to five, the first communication node or the second communication node discards the DCI sub-fields in units of DCI sub-fields with the same priority or configures a shared indication. For example, if a first DCI sub-field and a second DCI sub-field belong to a first functional group and priority information of the first functional group is a first priority, priority information of the first DCI sub-field and priority information of the second DCI sub-field are each the first priority. When the first communication node or the second communication node discards the DCI sub-fields in the first functional group (that is, the DCI sub-fields with the first priority), the first DCI sub-field and the second DCI sub-field are simultaneously discarded or the shared indication is configured.

In an embodiment, in the preceding method three or four, when the DCI sub-fields are divided into several functional groups, the first communication node or the second communication node discards the DCI sub-fields in units of functional groups or configures the shared indication. For example, if a first DCI sub-field and a second DCI sub-field belong to a first functional group and priority information of the first functional group is a first priority, priority information of the first DCI sub-field and priority information of the second DCI sub-field are each the first priority. When the first communication node or the second communication node discards the DCI sub-fields in the first functional group (that is, the DCI sub-fields with the first priority), the first DCI sub-field and the second DCI sub-field are simultaneously discarded or the shared indication is configured.

In an embodiment, when the priorities of the DCI sub-fields are consistent, the first communication node or the second communication node may distinguish the DCI sub-fields according to a configuration order of the DCI sub-fields or a sequence of DCI bits in which the DCI sub-fields are located. For example, if the priority information of the first DCI sub-field and the priority information of the second DCI sub-field are each the first priority and the first DCI sub-field is configured earlier, the first DCI sub-field is discarded first by default or the shared indication is configured.

In an embodiment, the DCI sub-field not configured with the priority information by the pre-definition in the protocol or not configured with the RRC signaling has a highest priority; or the DCI sub-field not configured with the priority information by the pre-definition in the protocol or not configured with the RRC signaling has a lowest priority. For example, if the priority information of the first DCI sub-field and the priority information of the second DCI sub-field are each the first priority and a third DCI sub-field is not configured with the priority information by the pre-definition in the protocol or not configured with the RRC signaling, then the third DCI sub-field has the highest priority by default, that is, the third DCI sub-field has a higher priority than the first DCI sub-field and the second DCI sub-field.

FIG. 3 is a flowchart of another control signaling transmission method according to an embodiment. As shown in FIG. 3, the method provided in this embodiment is applicable to a first communication node (such as the access network device). The method includes the following.

In S310, a first communication node determines a threshold value.

In an embodiment, the method for the first communication node to determine the threshold value may include any one of the three methods described below.

In method one, the first communication node determines the threshold value according to a pre-definition in the protocol.

For example, the threshold value M may be 84, 85, 90, 100, 108, 109, 150, 192, 193, 200, 216, 217 and the like.

In method two, the first communication node determines a threshold value candidate set according to the pre-definition in the protocol and selects the threshold value from the threshold value candidate set through radio resource control (RRC) signaling.

For example, the threshold value candidate set is $\{M_1, M_2, ..., Mi\}$ (i=0, ..., n; n≥0), the threshold value M is selected from the threshold value candidate set through the RRC signaling, and the threshold value M may be 84, 85, 90, 100, 108, 109, 150, 192, 193, 200, 216, 217 and the like.

In method three, the first communication node determines a threshold value proportion according to the pre-definition in the protocol or RRC signaling and calculates the threshold value according to a basic bit size of the second control information and the threshold value proportion.

For example, a value of the threshold value proportion o is in a range of 0 to 1, which may be 10%, 15%, 20%, 25%, 30%, 40%, 50%, 60%, 70%, 80% and the like.

In an embodiment, when the second control information schedules one cell, the basic bit size of the second control information is N and the threshold value $M = \lceil N * (1 + o) \rceil$; and when the second control information schedules at least two cells, the basic bit size of the second control information is $N_i (i = 0,..., n - 1)$, n denotes the number of cells scheduled by the second control information, and the threshold value $M = \lceil max(N_0, ..., N_i) \times (1 + o) \rceil$.

In an embodiment, when the second control information schedules one cell, the basic bit size of the second control information is N and the threshold value $M = \lceil N * (1 + o) \rceil$; and when the second control information schedules at least two cells, the basic bit size of the second control information is $N_i (i = 0,..., n - 1)$, n denotes the number of cells scheduled by the second control information, and the threshold value $M = \left\lceil \frac{\sum_{i=n-1} N_i}{n} \times (1 + o) \right\rceil$.

In S320, the first communication node determines second control information according to the threshold value, where the second control information includes at least one downlink control information (DCI) sub-field.

In an embodiment, the second control information may be DCI carried by a PDCCH located in a PCell or an SCell for scheduling PDSCHs or PUSCHs located in at least two cells. Multiple CCs carry data transmission in the at least two cells.

The second control information includes at least one DCI sub-field, and the at least one DCI sub-field may be configured with a priority by the method described in the preceding embodiments. The DCI sub-field may perform independent indication or shared indication for multiple cells. In the case of the independent indication, a data size of the DCI sub-field is equal to a sum of sizes required to independently indicate every cell. For example, if the first DCI sub-field independently indicates a first cell and a second cell, indicates that a data size of the first cell is a, and indicates that a data size of the second cell is b, a data size of the first DCI sub-field is (a+b). In the case of the shared indication, the data size of the DCI sub-field is equal to a maximum among sizes required to independently indicate every cell. For example, if the first DCI sub-field performs the shared indication for the first cell and the second cell, independently indicates that the data size of the first cell is a, and independently indicates that the data size of the second cell is b, the data size of the first DCI sub-field is max{a, b}.

In an embodiment, the method for the first communication node to determine the second control information according to the threshold value may include any one of the eight solutions described below.

Solution one includes A1 to A5.

In A1, the first communication node acquires a target DCI sub-field from the second control information, where the target DCI sub-field is one DCI sub-field with a highest priority among current remaining DCI sub-fields.

After used as the target DCI sub-field, one DCI sub-field will no longer be used as an object for next selection of the target DCI sub-field. That is, when A1 is performed for the first time, the second control information includes all DCI sub-fields, and the target DCI sub-field is the DCI sub-field with the highest priority among all the DCI sub-fields. When A1 is performed for the X-th time (X ≥ 2), the second control information includes the current remaining DCI sub-fields except the target DCI sub-field selected in the above, and the target DCI sub-field is the DCI sub-field with the highest priority among the current remaining DCI sub-fields.

In A2, the first communication node configures a state of the target DCI sub-field to be an independent indication, calculates a data size of the target DCI sub-field, and updates a first bit size of the second control information according to the data size of the target DCI sub-field.

An initial value of the first bit size of the second control information is 0. That is, when A2 is performed for the first time, the updated first bit size of the second control information is the data size of the target DCI sub-field; when A2 is performed for the X-th time (X ≥ 2), the updated first bit size of the second control information is a sum of the data size of the target DCI sub-field selected when A1 is performed for the X-th time and the updated first bit size of the second control information when A1 is performed for the (X-1)-th time.

In A3, the first communication node determines whether the first bit size of the second control information is greater than the threshold value.

In A4, in the case where the first bit size of the second control information is greater than the threshold value, the first communication node modifies the state of the target DCI sub-field to be a shared indication and updates the first bit size of the second control information; where in the case where the updated first bit size of the second control information is not greater than the threshold value, the first communication node acquires a next target DCI sub-field and performs A2 in which a state of the next target DCI sub-field is configured to be the independent indication; and in the case where the updated first bit size of the second control information is greater than the threshold value, the first communication node configures states of the remaining DCI sub-fields to be shared indications.

In A5, in the case where the first bit size of the second control information is not greater than the threshold value, the first communication node acquires the next target DCI sub-field and performs A2 in which the state of the next target DCI sub-field is configured to be the independent indication until the first bit size of the second control information is greater than the threshold value.

Solution two includes a1 to a5.

In a1, the first communication node acquires a target DCI sub-field from the second control information, where the target DCI sub-field is one DCI sub-field with a highest priority among current remaining DCI sub-fields.

In a2, the first communication node configures a state of the target DCI sub-field to be an independent indication, calculates a data size of the target DCI sub-field, and updates a first bit size of the second control information according to the data size of the target DCI sub-field.

In a3, the first communication node determines whether the first bit size of the second control information is not less than the threshold value.

In a4, in the case where the first bit size of the second control information is not less than the threshold value, the first communication node modifies the state of the target DCI sub-field to be a shared indication and updates the first bit size of the second control information; where in the case where the updated first bit size of the second control information is less than the threshold value, the first communication node acquires a next target DCI sub-field and performs a2 in which a state of the next target DCI sub-field is configured to be the independent indication; and in the case where the updated first bit size of the second control information is not less than the threshold value, the first communication node configures states of the remaining DCI sub-fields to be shared indications.

In a5, in the case where the first bit size of the second control information is less than the threshold value, the first communication node acquires the next target DCI sub-field and performs a2 in which the state of the next target DCI sub-field is configured to be the independent indication until the first bit size of the second control information is not less than the threshold value.

Solution three includes B1 to B5.

In B1, the first communication node acquires a target DCI sub-field from the second control information, where the target DCI sub-field is one DCI sub-field with a highest priority among current remaining DCI sub-fields.

After used as the target DCI sub-field, one DCI sub-field will no longer be used as an object for next selection of the target DCI sub-field. That is, when B1 is performed for the first time, the second control information includes all DCI sub-fields, and the target DCI sub-field is the DCI sub-field with the highest priority among all the DCI sub-fields; when B 1 is performed for the X-th time (X ≥ 2), the second control information includes the current remaining DCI sub-fields except the target DCI sub-field selected in the above, and the target DCI sub-field is the DCI sub-field with the highest priority among the current remaining DCI sub-fields.

In B2, the first communication node configures a state of the target DCI sub-field to be an independent indication, calculates a data size of the target DCI sub-field, and updates a first bit size of the second control information according to the data size of the target DCI sub-field.

An initial value of the first bit size of the second control information is 0. That is, when B2 is performed for the first time, the updated first bit size of the second control information is the data size of the target DCI sub-field; when B2 is performed for the X-th time (X ≥ 2), the updated first bit size of the second control information is a sum of the data size of the target DCI sub-field selected when B 1 is performed for the X-th time and the updated first bit size of the second control information when B1 is performed for the (X-1)-th time.

In B3, the first communication node determines whether the first bit size of the second control information is greater than the threshold value.

In B4, in the case where the first bit size of the second control information is greater than the threshold value, the first communication node modifies the state of the target DCI sub-field to be a shared indication and updates the first bit size of the second control information; where in the case where the updated first bit size of the second control information is not greater than the threshold value, the first communication node acquires a next target DCI sub-field and performs B2 in which a state of the next target DCI sub-field is configured to be the independent indication; and in the case where the updated first bit size of the second control information is greater than the threshold value, the first communication node discards a current DCI sub-field and the remaining DCI sub-fields.

In B5, in the case where the first bit size of the second control information is not greater than the threshold value, the first communication node acquires the next target DCI sub-field and performs B2 in which the state of the next target DCI sub-field is configured to be the independent indication until the first bit size of the second control information is greater than the threshold value.

Solution four includes b1 to b5.

In b1, the first communication node acquires a target DCI sub-field from the second control information, where the target DCI sub-field is one DCI sub-field with a highest priority among current remaining DCI sub-fields.

In b2, the first communication node configures a state of the target DCI sub-field to be an independent indication, calculates a data size of the target DCI sub-field, and updates a first bit size of the second control information according to the data size of the target DCI sub-field.

In b3, the first communication node determines whether the first bit size of the second control information is not less than the threshold value.

In b4, in the case where the first bit size of the second control information is not less than the threshold value, the first communication node modifies the state of the target DCI sub-field to be a shared indication and updates the first bit size of the second control information; where in the case where the updated first bit size of the second control information is less than the threshold value, the first communication node acquires a next target DCI sub-field and performs b2 in which a state of the next target DCI sub-field is configured to be the independent indication; and in the case where the updated first bit size of the second control information is not less than the threshold value, the first communication node discards a current DCI sub-field and the remaining DCI sub-fields.

In b5, in the case where the first bit size of the second control information is less than the threshold value, the first communication node acquires the next target DCI sub-field and performs b2 in which the state of the next target DCI sub-field is configured to be the independent indication until the first bit size of the second control information is not less than the threshold value.

Differences between the preceding solutions one and two and the preceding solutions three and four are that in the case where the first bit size of the second control information is greater than the threshold value or in the case where the first bit size of the second control information is not less than the threshold value, after the first communication node modifies the state of the target DCI sub-field to be the shared indication, in solutions one and two, the remaining DCI sub-fields are not discarded, but the states of the remaining DCI sub-dominas are configured to be the shared indications; and in solutions three and four, part of the DCI sub-fields are discarded. It can be seen that solutions one and two can ensure the integrity of the DCI sub-fields, and solutions three and four can reduce the overhead of the second control information.

Solution five includes C1 to C3.

In C1, the first communication node determines a sum of data sizes of all DCI sub-fields in the second control information.

In C2, the first communication node determines whether the sum of the data sizes of all the DCI sub-fields in the second control information is greater than the threshold value.

In C3, in the case where the sum of the data sizes of all the DCI sub-fields in the second control information is greater than the threshold value, the first communication node discards a DCI sub-field with a low priority in priority order until a sum of data sizes of remaining DCI sub-fields is not greater than the threshold value.

Solution six includes c1 to c3.

In c1, the first communication node determines a sum of data sizes of all DCI sub-fields in the second control information.

In c2, the first communication node determines whether the sum of the data sizes of all the DCI sub-fields in the second control information is not less than the threshold value.

In c3, in the case where the sum of the data sizes of all the DCI sub-fields in the second control information is not less than the threshold value, the first communication node discards a DCI sub-field with a low priority in priority order until a sum of data sizes of remaining DCI sub-fields is less than the threshold value.

Solution seven includes D1 to D3.

In D1, the first communication node determines a sum of data sizes of all DCI sub-fields in the second control information.

In D2, the first communication node determines whether the sum of the data sizes of all the DCI sub-fields in the second control information is greater than the threshold value.

In D3, in the case where the sum of the data sizes of all the DCI sub-fields in the second control information is greater than the threshold value, the first communication node configures a state of a DCI sub-field with a low priority to be a shared indication in priority order and updates the sum of the data sizes of all the DCI sub-fields until the updated sum of the data sizes of all the DCI sub-fields is not greater than the threshold value.

The states of all the DCI sub-fields may all be independent indications, may all be shared indications, or may be independent indications and shared indications. Therefore, in the case where the states of all the DCI sub-fields may all be the independent indications, the first communication node may configure the state of the DCI sub-field with a lower priority to be the shared indication in priority order and update the sum of the data sizes of all the DCI sub-fields; and in the case where the states of all the DCI sub-fields are the independent indications and the shared indications, the first communication node may configure the state of the DCI sub-field with a low priority and a state of the independent indication to be the shared indication in priority order and update the sum of the data sizes of all the DCI sub-fields.

Solution eight includes d1 to d3.

In d1, the first communication node determines a sum of data sizes of all DCI sub-fields in the second control information.

In d2, the first communication node determines whether the sum of the data sizes of all the DCI sub-fields in the second control information is not less than the threshold value.

In d3, in the case where the sum of the data sizes of all the DCI sub-fields in the second control information is not less than the threshold value, the first communication node configures a state of a DCI sub-field with a low priority to be a shared indication in priority order and updates the sum of the data sizes of all the DCI sub-fields until the updated sum of the data sizes of all the DCI sub-fields is less than the threshold value.

In an embodiment, for C1 in solution five, c1 in solution six, D1 in solution seven, and d1 in solution eight, any one of the four methods described below may be used for determination.

The first communication node determines states of all the DCI sub-fields to be independent indications according to pre-definition in the protocol and determines the sum of the data sizes of all the DCI sub-fields.

Alternatively, the first communication node determines states of all the DCI sub-fields to be shared indications according to pre-definition in the protocol and determines the sum of the data sizes of all the DCI sub-fields.

Alternatively, the first communication node determines a state of at least one of all the DCI sub-fields to be an independent indication and states of remaining DCI sub-fields to be the shared indications according to pre-definition in the protocol and determines the sum of the data sizes of all the DCI sub-fields.

Alternatively, the first communication node determines a state of at least one of all the DCI sub-fields to be the independent indication and states of remaining DCI sub-fields to be the shared indications according to higher layer signaling and determines the sum of the data sizes of all the DCI sub-fields.

In S330, the first communication node sends the second control information to a second communication node.

Through the second control information determined by the threshold value, overhead of control signaling may be reduced, redundant indications may be eliminated, the doubled overhead may be alleviated when one DCI simultaneously schedules two PDSCHs or PUSCHs. In such way, a blockage rate of the PDCCH does not increase excessively, and the second control information is the basis for ensuring the flexibility of DCI indication. In this manner, requirements of a onetuning multi-communication system are satisfied and the forward compatibility of the whole system is improved.

Some exemplary embodiments are listed below to illustrate the control signaling transmission method provided in FIG. 3 of the present application. The following exemplary embodiments may be implemented independently or in combination.

In a first exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the the pre-definition in the protocol, determines the first DCI sub-field from the second control information, configures the state of the first DCI sub-field to be the independent indication, calculates the data size $a$ of the first DCI sub-field, and updates the first bit size of the second control information to be $a$. The first communication node determines whether $a$ is greater than the threshold value M; in the case where $a$ is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further configures states of the second DCI sub-field and the third DCI sub-field to be the shared indications; in the case where $a$ is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is greater than the threshold value M.

In a second exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set {$M_1$, $M_2$,..., Mi} (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, determines the first DCI sub-field from the second control information, configures the state of the first DCI sub-field to be the independent indication, calculates the data size $a$ of the first DCI sub-field, and updates the first bit size of the second control information to be $a$; the first communication node determines whether a is greater than the threshold value M; in the case where a is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further configures states of the second DCI sub-field and the third DCI sub-field to be the shared indications; in the case where a is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is greater than the threshold value M.

In a third exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion o (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The first DCI sub-field is determined from the second control information, the state of the first DCI sub-field is configured to be the independent indication, the data size a of the first DCI sub-field is calculated, and the first bit size of the second control information is updated to be $a$; the first communication node determines whether a is greater than the threshold value M; in the case where a is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further configures states of the second DCI sub-field and the third DCI sub-field to be the shared indications; in the case where a is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is greater than the threshold value M.

In a fourth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol, determines the first DCI sub-field from the second control information, configures the state of the first DCI sub-field to be the independent indication, calculates the data size $a$ of the first DCI sub-field, and updates the first bit size of the second control information to be a; the first communication node determines whether a is greater than the threshold value M; in the case where a is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further discards the current DCI sub-field (that is, the first DCI sub-field), the second DCI sub-field, and the third DCI sub-field; in the case where a is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be $(a+b)$ until the first bit size of the second control information is greater than the threshold value M.

In a fifth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set $\{M_1, M_2,..., M_i\}$ (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, determines the first DCI sub-field from the second control information, configures the state of the first DCI sub-field to be the independent indication, calculates the data size a of the first DCI sub-field, and updates the first bit size of the second control information to be a; the first communication node determines whether a is greater than the threshold value M; in the case where a is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further discards the current DCI sub-field (that is, the first DCI sub-field), the second DCI sub-field, and the third DCI sub-field; in the case where a is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be $(a+b)$ until the first bit size of the second control information is greater than the threshold value M.

In a sixth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion o (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The first DCI sub-field is determined from the second control information, the state of the first DCI sub-field is configured to be the independent indication, the data size $a$ of the first DCI sub-field is calculated, and the first bit size of the second control information is updated to be a; the first communication node determines whether a is greater than the threshold value M; in the case where a is greater than the threshold value M, the first communication node modifies the state of the first DCI sub-field to be the shared indication, updates the first bit size of the second control information to be c, and further determines whether c is greater than the threshold value M; in the case where c is not greater than the threshold value M, the first communication node determines the second DCI sub-field from the second control information; in the case where c is greater than the threshold value M, the first communication node further discards the current DCI sub-field (that is, the first DCI sub-field), the second DCI sub-field, and the third DCI sub-field; in the case where a is not greater than the threshold value M, the first communication node determines the second DCI sub-field from the second control information, configures the state of the second DCI sub-field to be the independent indication, calculates the data size $b$ of the second DCI sub-field, and updates the first bit size of the second control information to be $(a+b)$ until the first bit size of the second control information is greater than the threshold value M.

In a seventh exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol and determines the sum of data sizes of the first DCI sub-field, the second DCI sub-field and the third DCI sub-field. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially discards the DCI sub-fields in an order of the third DCI sub-field, the second DCI sub-field and the first DCI sub-field until the sum of the data sizes of the remaining DCI sub-fields is not greater than the threshold value. Optionally, in the case where the sum of the data sizes of the first DCI sub-field, the second DCI sub-field and the third DCI sub-field is not greater than the threshold value M, the first communication node retains all current DCI sub-fields.

In an eighth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set $\{M_1, M_2, ..., M_i\}$ (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, and determines the sum of the data sizes of the first DCI sub-field, the second DCI sub-field and the third DCI sub-field. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially discards the DCI sub-fields in an order of the third DCI sub-field, the second DCI sub-field and the first DCI sub-field until the sum of the data sizes of the remaining DCI sub-fields is not greater than the threshold value. Optionally, in the case where the sum of the data sizes of the first DCI sub-field, the second DCI sub-field and the third DCI sub-field is not greater than the threshold value M, the first communication node retains all current DCI sub-fields.

In a ninth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion o (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The sum of the data sizes of the first DCI sub-field, the second DCI sub-field and the third DCI sub-field is determined. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially discards the DCI sub-fields in an order of the third DCI sub-field, the second DCI sub-field and the first DCI sub-field until the sum of the data sizes of the remaining DCI sub-fields is not greater than the threshold value. Optionally, in the case where the sum of the data sizes of the first DCI sub-field, the second DCI sub-field and the third DCI sub-field is not greater than the threshold value M, the first communication node retains all current DCI sub-fields.

In a tenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol and determines the sum of data sizes of the first DCI sub-field, the second DCI sub-field and the third DCI sub-field. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is not greater than the threshold value. Optional, in the case where the sum of the data sizes of the first DCI sub-field, the second DCI sub-field and the third DCI sub-field is not greater than the threshold value M, the first communication node keeps current states of all the DCI sub-fields unchanged.

In an eleventh exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set $\{M_1, M_2, ..., M_i\}$ (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, and determines the sum of the data sizes of the first DCI sub-field, the second DCI sub-field and the third DCI sub-field. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is not greater than the threshold value. Optional, in the case where the sum of the data sizes of the first DCI sub-field, the second DCI sub-field and the third DCI sub-field is not greater than the threshold value M, the first communication node keeps current states of all the DCI sub-fields unchanged.

In a twelfth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion o (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The sum of the data sizes of the first DCI sub-field, the second DCI sub-field and the third DCI sub-field is determined. The first communication node determines whether the sum of the data sizes of the first DCI sub-field, the second DCI sub-field and the third DCI sub-field is greater than the threshold value M; in the case where the sum of the data sizes of the first DCI sub-field, the second DCI sub-field and the third DCI sub-field is greater than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is not greater than the threshold value. Optional, in the case where the sum of the data sizes of the first DCI sub-field, the second DCI sub-field and the third DCI sub-field is not greater than the threshold value M, the first communication node keeps current states of all the DCI sub-fields unchanged.

In a thirteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol, determines the first DCI sub-field from the second control information, configures the state of the first DCI sub-field to be the independent indication, calculates the data size $a$ of the first DCI sub-field, and updates the first bit size of the second control information to be a; the first communication node determines whether $a$ is not less than the threshold value M; in the case where $a$ is not less than the threshold value M, the first communication node modifies the state of the first DCI sub-field to be the shared indication, updates the first bit size of the second control information to be c, and further determines whether c is not less than the threshold value M; in the case where c is less than the threshold value M, the first communication node determines the second DCI sub-field from the second control information; in the case where c is not less than the threshold value M, the first communication node further configures states of the second DCI sub-field and the third DCI sub-field to be the shared indications; in the case where a is less than the threshold value M, the first communication node determines the second DCI sub-field from the second control information, configures the state of the second DCI sub-field to be the independent indication, calculates the data size b of the second DCI sub-field, and updates the first bit size of the second control information to be ($a$+b) until the first bit size of the second control information is not less than the threshold value M.

In a fourteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set {$M_1$, $M_2$,..., $M_i$} (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, determines the first DCI sub-field from the second control information, configures the state of the first DCI sub-field to be the independent indication, calculates the data size $a$ of the first DCI sub-field, and updates the first bit size of the second control information to be $a$; the first communication node determines whether $a$ is not less than the threshold value M; in the case where $a$ is not less than the threshold value M, the first communication node modifies the state of the first DCI sub-field to be the shared indication, updates the first bit size of the second control information to be c, and further determines whether c is not less than the threshold value M; in the case where c is less than the threshold value M, the first communication node determines the second DCI sub-field from the second control information; in the case where c is not less than the threshold value M, the first communication node further configures states of the second DCI sub-field and the third DCI sub-field to be the shared indications; in the case where a is less than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is not less than the threshold value M.

In a fifteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion $o$ (for example, 10%, 15%, 20%, 25%, 30%, 40%, 50%, 60%, 70%, 80% and the like) according to the pre-definition in the protocol or RRC signaling and calculates the threshold value M according to the basic bit size of the second control information and the threshold value proportion. The first DCI sub-field is determined from the second control information, the state of the first DCI sub-field is configured to be the independent indication, the data size $a$ of the first DCI sub-field is calculated, and the first bit size of the second control information is updated to be $a$; the first communication node determines whether $a$ is not less than the threshold value M; in the case where a is not less than the threshold value M, the first communication node modifies the state of the first DCI sub-field to be the shared indication, updates the first bit size of the second control information to be c, and further determines whether c is not less than the threshold value M; in the case where c is less than the threshold value M, the first communication node determines the second DCI sub-field from the second control information; in the case where c is not less than the threshold value M, the first communication node further configures states of the second DCI sub-field and the third DCI sub-field to be the shared indications; in the case where a is less than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is not less than the threshold value M.

In a sixteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol, determines the first DCI sub-field from the second control information, configures the state of the first DCI sub-field to be the independent indication, calculates the data size $a$ of the first DCI sub-field, and updates the first bit size of the second control information to be $a$; the first communication node determines whether $a$ is not less than the threshold value M; in the case where a is not less than the threshold value M, the first communication node modifies the state of the first DCI sub-field to be the shared indication, updates the first bit size of the second control information to be c, and further determines whether c is not less than the threshold value M; in the case where c is less than the threshold value M, the first communication node determines the second DCI sub-field from the second control information; in the case where $c$ is not less than the threshold value M, the first communication node further discards the current DCI sub-field (that is, the first DCI sub-field), the second DCI sub-field, and the third DCI sub-field; in the case where $a$ is less than the threshold value M, the first communication node determines the second DCI sub-field from the second control information, configures the state of the second DCI sub-field to be the independent indication, calculates the data size b of the second DCI sub-field, and updates the first bit size of the second control information to be ($a+b$) until the first bit size of the second control information is not less than the threshold value M.

In a seventeenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set {$M_1$, $M_2$,..., $M_i$} (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, determines the first DCI sub-field from the second control information, configures the state of the first DCI sub-field to be the independent indication, calculates the data size $a$ of the first DCI sub-field, and updates the first bit size of the second control information to be $a$; the first communication node determines whether $a$ is not less than the threshold value M; in the case where a is not less than the threshold value M, the first communication node modifies the state of the first DCI sub-field to be the shared indication, updates the first bit size of the second control information to be $c$, and further determines whether c is not less than the threshold value M; in the case where $c$ is less than the threshold value M, the first communication node determines the second DCI sub-field from the second control information; in the case where $c$ is not less than the threshold value M, the first communication node further discards the current DCI sub-field (that is, the first DCI sub-field), the second DCI sub-field, and the third DCI sub-field; in the case where $a$ is less than the threshold value M, the first communication node determines the second DCI sub-field from the second control information, configures the state of the second DCI sub-field to be the independent indication, calculates the data size $b$ of the second DCI sub-field, and updates the first bit size of the second control information to be ($a+b$) until the first bit size of the second control information is not less than the threshold value M.

In an eighteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion $o$ (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The first DCI sub-field is determined from the second control information, the state of the first DCI sub-field is configured to be the independent indication, the data size $a$ of the first DCI sub-field is calculated, and the first bit size of the second control information is updated to be $a$; the first communication node determines whether $a$ is not less than the threshold value M; in the case where $a$ is not less than the threshold value M, the first communication node modifies the state of the first DCI sub-field to be the shared indication, updates the first bit size of the second control information to be $c$, and further determines whether $c$ is not less than the threshold value M; in the case where $c$ is less than the threshold value M, the first communication node determines the second DCI sub-field from the second control information; in the case where $c$ is not less than the threshold value M, the first communication node further discards the current DCI sub-field (that is, the first DCI sub-field), the second DCI sub-field, and the third DCI sub-field; in the case where $a$ is less than the threshold value M, the first communication node determines the second DCI sub-field from the second control information, configures the state of the second DCI sub-field to be the independent indication, calculates the data size $b$ of the second DCI sub-field, and updates the first bit size of the second control information to be $(a+b)$ until the first bit size of the second control information is not less than the threshold value M.

In a nineteenth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol and determines the sum of data sizes of the first DCI sub-field, the second DCI sub-field and the third DCI sub-field. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially discards the DCI sub-fields in an order of the third DCI sub-field, the second DCI sub-field and the first DCI sub-field until the sum of the data sizes of the remaining DCI sub-fields is less than the threshold value. Optionally, in the case where the sum of the data sizes of the first DCI sub-field, the second DCI sub-field and the third DCI sub-field is less than the threshold value M, the first communication node retains all current DCI sub-fields.

In a twentieth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set $\{M_1, M_2, ..., M_i\}$ ($i=0, ..., n; n \geq 0$) according to the pre-definition in the protocol, selects the threshold value M (for example, 84, 85, 90, 100, 108, 109, 150, 192, 193, 200, 216, 217 and the like) from the threshold value candidate set through RRC signaling, and determines the sum of the data sizes of the first DCI sub-field, the second DCI sub-field and the third DCI sub-field. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially discards the DCI sub-fields in an order of the third DCI sub-field, the second DCI sub-field and the first DCI sub-field until the sum of the data sizes of the remaining DCI sub-fields is less than the threshold value. Optionally, in the case where the sum of the data sizes of the first DCI sub-field, the second DCI sub-field and the third DCI sub-field is less than the threshold value M, the first communication node retains all current DCI sub-fields.

In a twenty-first exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion $o$ (for example, 10%, 15%, 20%, 25%, 30%, 40%, 50%, 60%, 70%, 80% and the like) according to pre-definition in the protocol or RRC signaling and calculates the threshold value M according to the basic bit size of the second control information and the threshold value proportion. The sum of the data sizes of the first DCI sub-field, the second DCI sub-field and the third DCI sub-field is determined. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially discards the DCI sub-fields in an order of the third DCI sub-field, the second DCI sub-field and the first DCI sub-field until the sum of the data sizes of the remaining DCI sub-fields is less than the threshold value. Optionally, in the case where the sum of the data sizes of the first DCI sub-field, the second DCI sub-field and the third DCI sub-field is less than the threshold value M, the first communication node retains all current DCI sub-fields.

In a twenty-second exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value M (for example, 84, 85, 90, 100, 108, 109, 150, 192, 193, 200, 216, 217 and the like) according to the pre-definition in the protocol and determines the sum of data sizes of the first DCI sub-field, the second DCI sub-field and the third DCI sub-field. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is less than the threshold value. Optional, in the case where the sum of the data sizes of the first DCI sub-field, the second DCI sub-field and the third DCI sub-field is less than the threshold value M, the first communication node keeps current states of all the DCI sub-fields unchanged.

In a twenty-third exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value candidate set $\{M_1, M_2, ..., M_i\}$ (i=0, ..., n; n≥0) according to the pre-definition in the protocol, selects the threshold value M (for example, 84, 85, 90, 100, 108, 109, 150, 192, 193, 200, 216, 217 and the like) from the threshold value candidate set through RRC signaling, and determines the sum of the data sizes of the first DCI sub-field, the second DCI sub-field and the third DCI sub-field. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is less than the threshold value. Optional, in the case where the sum of the data sizes of the first DCI sub-field, the second DCI sub-field and the third DCI sub-field is less than the threshold value M, the first communication node keeps current states of all the DCI sub-fields unchanged.

In a twenty-fourth exemplary embodiment, it is assumed that the second control information includes the first DCI sub-field, the second DCI sub-field and the third DCI sub-field, where a priority of the first DCI sub-field is greater than a priority of the second DCI sub-field which is greater than a priority of the third DCI sub-field. Therefore, the first communication node determines the threshold value proportion o (for example, 10%, 15%, 20%, 25%, 30%, 40%, 50%, 60%, 70%, 80% and the like) according to the pre-definition in the protocol or RRC signaling and calculates the threshold value M according to the basic bit size of the second control information and the threshold value proportion. The sum of the data sizes of the first DCI sub-field, the second DCI sub-field and the third DCI sub-field is determined. The first communication node determines whether the sum of the data sizes of the first DCI sub-field, the second DCI sub-field and the third DCI sub-field is not less than the threshold value M; in the case where the sum of the data sizes of the first DCI sub-field, the second DCI sub-field and the third DCI sub-field is not less than the threshold value M, the first communication node sequentially configures the states of the DCI sub-fields to be the shared indications in an order of the third DCI sub-field, the second DCI sub-field and the first DCI sub-field and updates the sum of the data sizes of all the DCI sub-fields (the data size of the DCI sub-field is reduced by about half after the state of the DCI sub-field changes from the independent indication to the shared indication) until the updated sum of the data sizes of all the DCI sub-fields is less than the threshold value. Optional, in the case where the sum of the data sizes of the first DCI sub-field, the second DCI sub-field and the third DCI sub-field is less than the threshold value M, the first communication node keeps current states of all the DCI sub-fields unchanged.

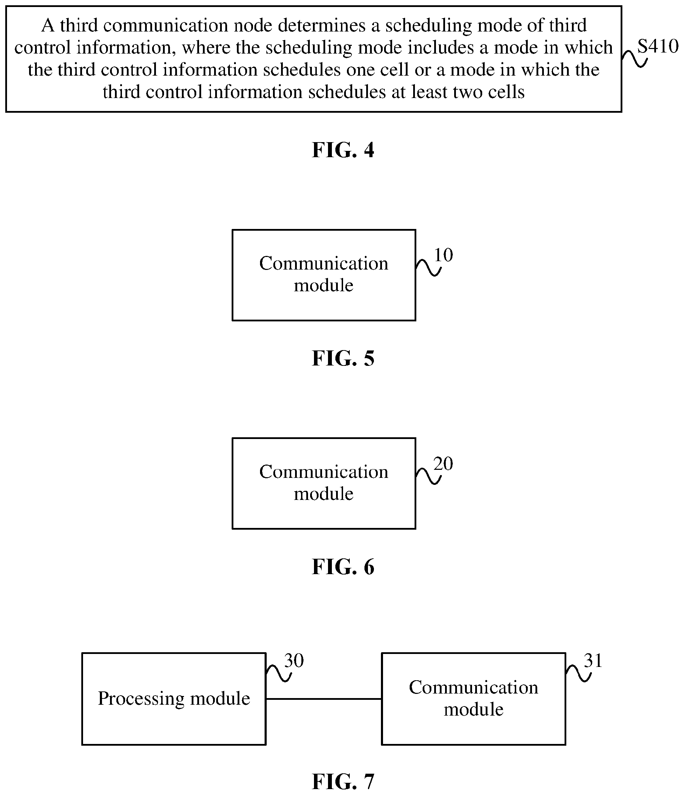

FIG. 4 is a flowchart of a control signaling acquisition method according to an embodiment. As shown in FIG. 4, the method provided in this embodiment is applicable to a third communication node (such as the access network device or the terminal device). The method includes the following.

In S410, a third communication node determines a scheduling mode of third control information, where the scheduling mode includes a mode in which the third control information schedules one cell or a mode in which the third control information schedules at least two cells.

In an embodiment, the third control information may be DCI carried by a PDCCH located in a PCell or an SCell, and the third control information may schedule either one cell or PDSCHs or PUSCHs located in at least two cells.

In an embodiment, the method for the third communication node to determine the scheduling mode of the third control information may include any one of the two methods described below.

In method one, the third communication node determines the scheduling mode of the third control information through higher layer signaling.

The higher layer signaling may be 1-bit RRC signaling. For example, the RRC signaling is 0, indicating the mode in which the third communication node schedules one cell; and the RRC signaling is 1, indicating the mode in which the third communication node schedules at least two cells.

In method two, the third communication node determines the scheduling mode of the third control information through different radio network temporary identities (RNTIs) scrambled by a cyclic redundancy check (CRC).

For example, RNTI A is scrambled by the CRC, indicating the mode in which the third communication node schedules one cell; and the CRC does not scramble RNTI A, indicating the mode in which the third communication node schedules at least two cells.

The present application further provides a method for determining DCI indication information based on the RRC signaling indication.

In an embodiment, the first communication node sends DCI to the second communication node, where the DCI is carried by a PDCCH located in a PCell or an SCell for scheduling PDSCHs or PUSCHs located in at least two cells. The DCI includes at least one DCI sub-field. The method for determining the DCI indication information based on the RRC signaling indication includes at least one of the two methods described below.

In method one, 1-bit RRC signaling is introduced for determining whether information indicated by two original DCI sub-fields to two CCs is consistent; and a new DCI sub-field is introduced, set to 1 bit, and. The new DCI sub-field is used for indicating information A and information B of a first CC. For example, the RRC signaling is 0, indicating that information indicated to the two CCs is consistent, and the RRC signaling is 1, indicating that information indicated to the two CCs is not consistent; the new DCI sub-field is 0, indicating information A, and the new DCI sub-field is 1, indicating information B. A configuration table may be shown in Table 1.

Table 1

| RRC bit | New DCI bit | First CC | Second CC |
|---------|-------------|----------|-----------|
| 0 | 0 | A | A |
| 0 | 1 | B | B |
| 1 | 0 | A | B |
| 1 | 1 | B | A |

In method two, n-bit RRC signaling is introduced for determining whether information indicated by In original DCI sub-fields to two CCs is consistent, where $n \geq 1$; and a new DCI sub-field is introduced, set to n bits. The new DCI sub-field is used for indicating information $A_i$ and information $B_i$ of the first CC (i=1, ..., n). For example, the RRC signaling is 0, indicating that information indicated to the two CCs is consistent, and the RRC signaling is 1, indicating that information indicated to the two CCs is not consistent; the i-th bit of the new DCI sub-field is 0, indicating information $A_i$, and the i-th bit of the new DCI sub-field is 1, indicating information $B_i$. A configuration table may be shown in Table 2.

Table 2

| First RRC bit | First new DCI bit | First CC | Second CC |
|---------------|-------------------|----------|-----------|
| 0 | 0 | $A_1$ | $A_1$ |
| 0 | 1 | $B_1$ | $B_1$ |
| 1 | 0 | $A_1$ | $B_1$ |
| 1 | 1 | $B_1$ | $A_1$ |
| ...... | | | |
| n-th RRC bit | n-th new DCI bit | First CC | Second CC |
| 0 | 0 | $A_n$ | $A_n$ |

(continued)

| n-th RRC bit | n-th new DCI bit | First CC | Second CC |
|---|---|---|---|
| 0 | 1 | $B_n$ | $B_n$ |
| 1 | 0 | $A_n$ | $B_n$ |
| 1 | 1 | $B_n$ | $A_n$ |

The present application further provides a method of determining a data size of DCI.

In an embodiment, the first communication node sends DCI to the second communication node, where the DCI is carried by a PDCCH located in a PCell or an SCell for scheduling PDSCHs or PUSCHs located in at least two cells. The DCI includes at least one DCI sub-field. The DCI sub-field independently indicates information of one cell or performs the shared indication for information of multiple cells.

In the case where the first communication node determines that a certain DCI sub-field performs the shared indication for the information of multiple cells, the method for determining the data size of the DCI sub-field includes at least one of the two methods described below.

In method one, according to pre-definition in the protocol, it is determined that the data size of the DCI sub-field that performs the shared indication is a maximum value of the data size of the DCI sub-field corresponding to each cell.

In method two, according to pre-definition in the protocol, it is determined that the data size of the DCI sub-field that performs the shared indication is a minimum value of the data size of the DCI sub-field corresponding to each cell.

In the case where the first communication node determines that a certain piece of DCI performs the shared indication for the information of multiple cells, the method for determining the data size of the DCI includes at least one of the two methods described below.

In method one, according to pre-definition in the protocol, it is determined that the data size of the DCI that performs the shared indication is a maximum value of the data size of the DCI corresponding to each cell.

In method two, according to pre-definition in the protocol, it is determined that the data size of the DCI that performs the shared indication is a minimum value of the data size of the DCI corresponding to each cell.

The present application further provides a method for jointly indicating resources in two cells.

In an embodiment, carry data transmission in two cells is carried by two CCs, one of the two CCs is denoted as a PCC and the other one of the two CCs is denoted as an SCC. In the joint indication method, resource scheduling information indicates to the scheduled second communication node a combination of a continuously allocated resource group on the bandwidth part $BWP_M$ of the PCC and a continuously allocated resource group on the bandwidth part $BWP_S$ of the SCC, where the resource group includes one or more resource blocks (RBs). The combination of two continuously allocated resource groups is indicated by a resource indication value (RIV), where the RIV is jointly determined by indication values RIVM and RIVS.

The indication value $RIV_M$ correspondingly indicates a start resource group index $RBG_M^{start}$ of continuously allocated RBs on $BWP_M$ and a length $L_M$ of continuous RBs. Further, in the case where a resource block group (RBG) includes only one RB, $RBG_M^{start}$ denotes an index of the RB. The value of $RIV_M$ corresponds to continuously allocated RBs on the PCC. The value of $RIV_M$ is given by the first communication node or determined according to the method described below.

In the case where $(L_M - 1) \le \lfloor N_{BWP_M}^{size}/2 \rfloor$, $RIV_M = N_{BWP_M}^{size}(L_M - 1) + RBG_M^{start}$ ; and in the case where $(L_M - 1) > \lfloor N_{BWP_M}^{size}/2 \rfloor$, $RIV_M = N_{BWP_M}^{size}(N_{BWP_M}^{size} - L_M + 1) + (N_{BWP_M}^{size} - 1 - RBG_M^{start})$. $N_{BWP_M}^{size}$ denotes a data size of $BWP_M$, and $L_M$ is greater than or equal to 1 and does not exceed $N_{BWP_M}^{size} - RBG_M^{start}$.

The indication value RIVS correspondingly indicates a start resource group index $RBG_S^{start}$ of continuously allocated RBs on $BWP_S$ and a length $L_S$ of continuous RBs. Further, in the case where the RBG includes only one RB, $RBG_S^{start}$ denotes the index of the RB. The value of RIVS corresponds to continuously allocated RBs on the SCC. The value of RIVS is given by the first communication node or determined according to the method described below.

In the case where $(L_S - 1) \leq \lfloor N_{BWP_S}^{size}/2 \rfloor$, $RIV_S = N_{BWP_S}^{size}(L_S - 1) + RBG_S^{start}$ ; and in the case where $(L_S - 1) > \lfloor N_{BWP_S}^{size}/2 \rfloor$, $RIV_S = N_{BWP_{SCC}}^{size}(N_{BWP_S}^{size} - L_S + 1) + (N_{BWP_S}^{size} - 1 - RBG_S^{start})$. $N_{BWP_S}^{size}$ denotes a data size of $BWP_S$, and $L_S$ is greater than or equal to 1 and does not exceed $N_{BWP_S}^{size} - RBG_S^{start}$.

The RIV is jointly determined by the indication values $RIV_M$ and RIVs, and a method for determining the RIV includes at least one of the four methods described below.

In method one, $RIV = RIV_M(n_{RIV_S} - 1) + RIV_S$, where $n_{RIV_S}$ denotes a total number of values of $RIV_S$.

In method two, $RIV = RIV_S(n_{RIV_M} - 1) + RIV_M$, where $n_{RIV_S}$ denotes a total number of values of RIVs.

In method three, RIVM is used as the abscissa and RIVS is used as the ordinate, RIV = (RIVM, RIVS), RIV is a two-dimensional coordinate value jointly determined by RIVM and RIVS, and the coordinate value uniquely corresponds to a combination of a segment of continuously allocated RBs on the bandwidth part $BWP_M$ of the PCC and a segment of continuously allocated RBs on the bandwidth part $BWP_S$ of the SCC.

In method four, RIVS is used as the abscissa and RIVM is used as the ordinate, RIV = (RIVS, RIVM), RIV is a two-dimensional coordinate value jointly determined by RIVM and RIVS, and the coordinate value uniquely corresponds to a combination of a segment of continuously allocated RBs on the bandwidth part $BWP_M$ of the PCC and a segment of continuously allocated RBs on the bandwidth part $BWP_S$ of the SCC.

The present application further provides a method for grouping RBGs of multi-cell frequency domain resources.

In an embodiment, data transmission in multiple cells is carried by multiple CCs, each CC is configured by the first communication node or predefined with a specific data size of $BWP_i$ by a protocol, i denotes a cell index, and $BWP_i$ consists of one or more RBs. After RBG grouping is performed on RB resources on each $BWP$, the actually occupied RBG is indicated to the scheduled second communication node by the resource scheduling information. A method for determining RBG grouping includes at least one of the two methods described below.

In method one, the RRC signaling configures or predefines a size $N_{RBG}^{size}$ of the RBG through a protocol, and the RBG grouping on each cell is determined according to . The size $N_{RBG}^{size}$ of the RBG is greater than or equal to 1 (for example, the size is 2, 3, 4, 5, 6, 7, and 8). Specifically, the number $n_i$ of RBGs in each cell is shown as

$$n_i = \left\lceil \frac{N_{BWP_i}^{size}}{N_{RBG}^{size}} \right\rceil, (i = 0, \ldots, k - 1)$$

, where $k$ denotes the total number of cells.

In method two, the RRC signaling configures or predefines the RBG granularity $N_{RBG_i}^{size}$ of each cell through a protocol and selects the minimum or maximum value $N_{RBG}^{size}$ among all configurations as the RBG grouping on each cell. Specifically, the number $n_i$ of RBGs in each cell is shown as

$$n_i = \left\lceil \frac{N_{BWP_i}^{size}}{N_{RBG}^{size}} \right\rceil, (i = 0, \ldots, k - 1)$$

, where k denotes the total number of cells.

The present application further provides a method for jointly indicating resources in two cells.

In an embodiment, data transmission in two cells is carried by two CCs, one of the two CCs is denoted as a PCC and the other one of the two CCs is denoted as an SCC. In the joint indication method, the resource scheduling information simultaneously indicates to the scheduled second communication node the resource groups allocated on the bandwidth part $BWP_M$ of the PCC and the bandwidth part $BWP_S$ of the SCC. The resource groups on $BWP_M$ and $BWP_S$ are divided into RBGs according to a table predefined in the protocol, respective RBG numbers $n_M$ and $n_S$ are obtained, and each RBG consists of one or more RBs. The resource scheduling information includes at least one of the following fields: a common indication field, a PCC indication field, or an SCC indication field.

The common indication field simultaneously indicates the occupancy of some resource groups of the PCC and the SCC, and a method for determining the number $N_{bitmap}^{size}$ of bits in a resource scheduling information field includes at least one of the four methods described below.

In method one, a value candidate set of $N_{bitmap}^{size}$ in the common indication field is predefined by the protocol and the value of $N_{bitmap}^{size}$ is determined through the RRC signaling configuration.

In method two, the $N_{bitmap}^{size}$ is directly configured by the RRC signaling.

In method three, the value of $N_{bitmap}^{size}$ is directly predefined by the protocol.

In method four, $N_{bitmap}^{size}$ is determined according to the minimum number of RBGs, that is, $N_{bitmap}^{size} = min(n_M, n_N)$.

The PCC indication field and the SCC indication field respectively indicate the occupancy of some resource groups of the PCC and the SCC, and a method for determining the numbers $N_{bitmapP_M}^{size}$ and $N_{bitmapP_M}^{size}$ of bits in resource scheduling information fields of the PCC and the SCC includes at least one of the three methods described below.

In method one, the numbers $N_{bitmapP_M}^{size}$ and $N_{bitmapP_M}^{size}$ of bits are determined based on a principle that the numbers of bits in the two CC indication fields are as consistent as possible, the number $N_{bitmapP_M}^{size}$ of bits in the PCC indication field is $\lceil N/2 \rceil$, and the number $N_{bitmapS}^{size}$ of bits in the SCC indication field is $\lfloor N/2 \rfloor$, where N denotes the total overhead of the two indication fields, N is predefined by the protocol or configured by the RRC signaling or calculated and obtained according to $N_{bitmap}^{size}$ and the total overhead of the indication, and $N_{bitmap}^{size}$ denotes the overhead of the common indication field.

In method two, the numbers $N_{bitmapP_M}^{size}$ and $N_{bitmapP_M}^{size}$ of bits are determined based on $N_{bitmap}^{size}$ and the number of RBGs of each CC, the number of bits in the PCC indication field is shown as $N_{bitmapP_M}^{size} = n_M - N_{bitmap}^{size}$, and the number of bits in the SCC indication field is shown as $N_{bitmapS}^{size} = n_S - N_{bitmap}^{size}$.

In method three, the numbers $N_{bitmapP_M}^{size}$ and $N_{bitmapP_M}^{size}$ of bits are determined based on N and the number of RBGs of each CC, the number of bits in the PCC indication field is shown as $N_{bitmapP_M}^{size} = \left\lceil N\left(\frac{n_M}{n_M+n_N}\right) \right\rceil$, and the number of bits in the SCC indication field is shown as $N_{bitmapP_N}^{size} = \left\lceil N\left(\frac{n_N}{n_M+n_N}\right) \right\rceil$, where N is predefined by the protocol or configured by the RRC signaling or calculated and obtained according to $N_{bitmapP_M}^{size}$ and the total overhead of the indication.

The present application further provides a method for grouping RBGs of multi-cell resources.

In an embodiment, multiple CCs carry data transmission in multiple cells, and each CC is configured by the first communication node or predefined with a specific data size of *BWP_i* by a protocol, where i denotes a cell index, and *BWP_i* consists of one or more RBs. After RBG grouping is performed on RB resources on each *BWP*, the actually occupied RBG is indicated to the scheduled second communication node by the resource scheduling information. A method for determining RBG grouping includes at least one of the three methods described below.

In method one, each bandwidth part (BWP) is independently grouped according to an RBG grouping table predefined in the protocol, and the data size of the BWP in the RBG grouping table corresponds to the data size of the RBG.

In method two, a relationship between the BWP bandwidth and the RBG granularity is predefined by the protocol, the smallest RBG granularity is selected, and the RBG grouping is performed on all cells according to this RBG granularity.

In method three, one PCC is predefined by the protocol or configured by the RRC, and the rest CC are SCCs. The RBG grouping is performed on *BWP_M* of the PCC according to $N_{RBG_M}^{size}$ predefined by the protocol or configured by the RRC signaling, and the actual total number of RBGs is shown as $n_M = \left\lceil N_{BWP_M}^{size} / N_{RBG_M}^{size} \right\rceil$. The BWP of the SCC is divided into $n_M$ RBGs as evenly as possible. Further, the number of RBs of the former $n_M - N_{BWP_M}^{size} + \left\lceil N_{BWP_M}^{size}/n_M \right\rceil * n_M$ RBGs is $\left\lceil N_{BWP_M}^{size}/n_M \right\rceil$, and the number of RBs of the latter

$N_{BWP_M}^{size} - \lfloor N_{BWP_M}^{size}/n_M \rfloor * n_M$ RBGs is $\lfloor N_{BWP_M}^{size}/n_M \rfloor$.

The present application further provides a method for determining the unified numbering of multi-cell BWP cascaded RBGs.

In an embodiment, data transmission in multiple cells is carried by multiple CCs, each CC is configured by the first communication node or predefined with a specific data size of BWP by the protocol and used for carrying data transmission, the BWP includes at least one RB, and the BWP is divided into at least one RBG according to the pre-definition in the protocol or not configured with the RRC signaling configuration. The RBGs of multiple cells are uniformly numbered, and a method for determining numbers of the multi-cell BWP cascaded RBGs includes at least one of the two methods described below.

In method one, the RBGs of each cell are divided according to a correspondence between the BWP and RBG granularity predefined by the protocol, and the RBG numbering is performed according to an RB index trend. Further, the index of each cell is predefined according to the protocol or configured by the RRC signaling, and the RBGs of each cell are cascaded in ascending or descending order of cell indices and renumbered.

For example, cell A and cell B exist, the index of cell A is 1, the index of cell B is 2, the BWP in cell A is divided into 3 RBGs, and the BWP in cell B is divided into 2 RBGs, then after cell A and cell B are cascaded in ascending order, the RBGs are uniformly encoded as RBG0, RBG1, RBG2, RBG3, and RBG4, where RBG0 to RBG2 belong to cell A, and RBG3 and RBG4 belong to cell B.

In method two, the RBGs of each cell are divided according to a correspondence between the BWP and RBG granularity predefined by the protocol, and the RBG numbering is performed according to an RB index trend. The cells are divided into one Pcell and at least one Scell according to the pre-definition in the protocol or not configured with the RRC signaling, and each Scell is configured with a corresponding index. RBGs of each Scell are cascaded in ascending or descending order of Scell indices. Further, the RBGs of the Pcell are cascaded after the Scell with the smallest or largest Scell index, and the cascaded RBGs are renumbered.

For example, cell A, cell B and cell C exist, cell A is the Pcell, cell B and cell C are the Scells, the indices are 1 and 2, respectively, the BWP in cell A is divided into 3 RBGs, the BWP in cell B is divided into 2 RBGs, and the BWP in cell C is divided into 2 RBGs, then cell B and cell C are cascaded in ascending order, and after the Scell with the smallest Scell index is cascaded with the Pcell, the RBGs are uniformly encoded as RBG0, RBG1, RBG2, RBG3, RBG4, RBG5, and RBG6, where RBG0 to RBG2 belong to cell A, RBG3 and RBG4 belong to cell B, and RBG5 and RBG6 belong to cell C.

The present application further provides a method for processing RBs at a cell edge.

In an embodiment, the cell is configured by the first communication node or predefined with a specific data size of BWP by the protocol and used for carrying data transmission, the BWP includes at least one RB, and the BWP is divided into at least one RBG according to the pre-definition in the protocol or not configured with the RRC signaling configuration. When RBG division is performed on the BWP, a method for processing RBs at the cell edge includes at least one of the five methods described below.

In method one, the RBGs of the cell are divided according to a correspondence between the size $N_{BWP}^{size}$ of the BWP and the RBG granularity $N_{RBG}^{size}$ predefined by the protocol, and the actual total number of RBGs is shown as $n = \lceil N_{BWP}^{size}/N_{RBG}^{size} \rceil$, that is, RBs with a division number less than $N_{RBG}^{size}$ are regarded as one single RBG.

In method two, the RBGs of the cell are divided according to a correspondence between the size $N_{BWP}^{size}$ of the BWP and the RBG granularity $N_{RBG}^{size}$ predefined by the protocol, the actual total number of RBGs is shown as $n = \lfloor N_{BWP}^{size}/N_{RBG}^{size} \rfloor$, RBs with a division number less than $N_{RBG}^{size}$ are combined into an RBG with the largest or smallest RBG index, and the data size of this RBG is shown as $N_{RBG}^{size} + N_{BWP}^{size} - n * N_{RBG}^{size}$.

In method three, the RBGs of the cell are divided according to a correspondence between the size $N_{BWP}^{size}$ of the BWP and the RBG granularity $N_{RBG}^{size}$ predefined by the protocol, and the actual total number of RBGs is shown as $n = \lfloor N_{BWP}^{size}/N_{RBG}^{size} \rfloor$. An actual data size of the first $N_{BWP}^{size} - n * N_{RBG}^{size}$ RBGs is $N_{RBG}^{size} + 1$, and an actual data size of the remaining $n - N_{BWP}^{size} + n * N_{RBG}^{size}$ RBGs is $N_{RBG}^{size}$.

In method four, the RBGs of the cell are divided according to a correspondence between the size $N_{BWP}^{size}$ of the BWP and the RBG granularity $N_{RBG}^{size}$ predefined by the protocol, and the actual total number of RBGs is shown as $n = \lfloor N_{BWP}^{size}/N_{RBG}^{size} \rfloor$. An actual data size of the first $n - N_{BWP}^{size} + n * N_{RBG}^{size}$ RBGs is $N_{RBG}^{size}$, and an actual data size of the remaining $N_{BWP}^{size} - n * N_{RBG}^{size}$ RBGs is $N_{RBG}^{size} + 1$.

In method five, the RBGs of the cell are divided according to a correspondence between the size $N_{BWP}^{size}$ of the BWP and the RBG granularity $N_{RBG}^{size}$ predefined by the protocol, and the actual total number of RBGs is shown as $n = \lceil N_{BWP}^{size}/N_{RBG}^{size} \rceil$, that is, RBs with a division number less than $N_{RBG}^{size}$ are discarded.

The present application further provides a method for jointly indicating resources in two cells.

In an embodiment, data transmission in two cells is carried by two CCs, one of the two CCs is denoted as a PCC and the other one of the two CCs is denoted as an SCC. In the joint indication method, the resource scheduling information simultaneously indicates to the scheduled second communication node resources allocated on the bandwidth part $BWP_M$ of the PCC and the bandwidth part $BWP_S$ of the SCC. The scheduling information includes an offset indication field used for determining a starting point of the RB or RBG indicated by common indication information in the scheduling information, and a method for determining a common indication starting point of the RB or RBG by the offset indication field includes at least one of the three methods described below.

In method one, n candidate values of offset values are predefined according to the protocol or configured by the RRC signaling and correspond to $n$ offset indices from 0 to $(n-1)$. The protocol defaults that index starting points of the RBGs or RBs of two cells are aligned, and the common indication starting point is the first corresponding RB or RBG after the offset values. The offset indication field directly indicates values of the offset indices to determine the corresponding offset values, thereby determining the common indication starting point.

In method two, the offset values are directly configured according to pre-definition in the protocol or not configured with the RRC signaling. The protocol defaults that index starting points of the RBGs or RBs of two cells are aligned, and the common indication starting point is the first corresponding RB or RBG after the offset values.

In method three, the protocol defaults that index starting points of the RBGs or RBs of two cells are aligned, and the common indication starting point is the first corresponding RB or RBG after the offset values. The offset indication field directly indicates the offset values, thereby determining the common indication starting point.

The present application further provides a method for indicating resource allocation in two cells.

In an embodiment, data transmission in two cells is carried by two CCs, one of the two CCs is denoted as a PCC and the other one of the two CCs is denoted as an SCC. In the joint indication, the resource scheduling information simultaneously indicates to the scheduled second communication node resources allocated on the bandwidth part $BWP_M$ of the PCC and the bandwidth part $BWP_S$ of the SCC. The scheduling information includes an indication field only for indicating the PCC and an indication field only for indicating the SCC, and overheads of the two fields are fixed to N. A method for determining indication resources of the PCC indication field and the SCC indication field includes at least one of the two methods described below. In method one, the indication resources of the PCC indication field and the SCC indication field are determined according to a data size of the bandwidth part of the PCC and a data size of the bandwidth part of the SCC. An indication bit of the PCC indication field is shown as $n_M = N * \left\lceil \frac{N_{BWP_M}^{size}}{N_{BWP_M}^{size} + N_{BWP_S}^{size}} \right\rceil$, an indication bit of the SCC indication field is shown as $n_S = N * \left\lceil \frac{N_{BWP_S}^{size}}{N_{BWP_S}^{size} + N_{BWP_M}^{size}} \right\rceil$, and $N_{BWP_P}^{size}$ and $N_{BWP_S}^{size}$ denote the data size of part of the bandwidth of the PCC and the data size of part of the bandwidth of the SCC, respectively.

In method two, the indication resources of the PCC indication field and the SCC indication field are determined according to the number of RBGs of the PCC and the number of RBGs of the SCC.

An indication bit of the PCC indication field is shown as $n_M = N * \left\lceil \frac{n_{RBG_P}}{n_{RBG_P} + n_{RBG_S}} \right\rceil$, an indication bit of the SCC indication field is shown as $n_S = N * \left\lceil \frac{n_{RBG_S}}{n_{RBG_P} + n_{RBG_S}} \right\rceil$, and $n_{RBG_P}$ and $n_{RBG_S}$ denote the number of RBGs of the PCC and the number of RBGs of the SCC, respectively.

FIG. 5 is a structural diagram of a control signaling transmission apparatus according to an embodiment. This apparatus may be configured in the access network device. As shown in FIG. 5, this apparatus includes a communication module 10.

The communication module 10 is configured to send first control information to a second communication node, where the first control information includes at least one DCI sub-field, and the at least one DCI sub-field includes priority information.

The control signaling transmission apparatus provided in this embodiment can perform the control signaling transmission method of the embodiment shown in FIG. 1. The implementation principle and technical effects of the control signaling transmission apparatus provided in this embodiment are similar to those of the preceding embodiments and are not repeated here.

In an embodiment, the priority information of the at least one DCI sub-field is determined by a first communication node according to pre-definition in the protocol.

Alternatively, the priority information of the at least one DCI sub-field is configured by the first communication node according to RRC signaling.

Alternatively, the priority information of the at least one DCI sub-field located in a same functional group is determined according to priority information of the functional group, where the priority information of the functional group is determined by the first communication node according to pre-definition in the protocol.

Alternatively, the priority information of the at least one DCI sub-field located in a same functional group is determined according to priority information of the functional group, where the priority information of the functional group is configured by the first communication node according to RRC signaling.

Alternatively, the priority information of the at least one DCI sub-field located in a same functional group is configured by the first communication node according to RRC signaling, and priority information of the functional group is determined by the first communication node according to pre-definition in the protocol.

In an embodiment, the DCI sub-field not configured with the priority information has a highest priority.

Alternatively, the DCI sub-field not configured with the priority information has a lowest priority.

FIG. 6 is a structural diagram of another control signaling transmission apparatus according to an embodiment. This apparatus may be configured in the terminal device. As shown in FIG. 6, this apparatus includes a communication module 20.

The communication module 20 is configured to receive first control information sent by a first communication node, where the first control information includes at least one DCI sub-field, and the at least one DCI sub-field includes priority information.

The control signaling transmission apparatus provided in this embodiment can perform the control signaling transmission method of the embodiment shown in FIG. 2. The implementation principle and technical effects of the control signaling transmission apparatus provided in this embodiment are similar to those of the preceding embodiments and are not repeated here.

In an embodiment, the priority information of the at least one DCI sub-field is determined by a first communication node according to pre-definition in the protocol.

Alternatively, the priority information of the at least one DCI sub-field is configured by the first communication node according to RRC signaling.

Alternatively, the priority information of the at least one DCI sub-field located in a same functional group is determined according to priority information of the functional group, where the priority information of the functional group is determined by the first communication node according to pre-definition in the protocol.

Alternatively, the priority information of the at least one DCI sub-field located in a same functional group is determined according to priority information of the functional group, where the priority information of the functional group is configured by the first communication node according to RRC signaling.

Alternatively, the priority information of the at least one DCI sub-field located in a same functional group is configured by the first communication node according to RRC signaling, and priority information of the functional group is determined by the first communication node according to pre-definition in the protocol.

In an embodiment, the DCI sub-field not configured with the priority information has a highest priority.

Alternatively, the DCI sub-field not configured with the priority information has a lowest priority.

FIG. 7 is a structural diagram of another control signaling transmission apparatus according to an embodiment. This apparatus may be configured in the access network device. As shown in FIG. 7, this apparatus includes a processing module 30 and a communication module 31.

The processing module 30 is configured to determine a threshold value and determine second control information according to the threshold value, where the second control information includes at least one DCI sub-field.

The communication module 31 is configured to send the second control information to a second communication node.

The control signaling transmission apparatus provided in this embodiment can perform the control signaling transmission method of the embodiment shown in FIG. 3. The implementation principle and technical effects of the control signaling transmission apparatus provided in this embodiment are similar to those of the preceding embodiments and are not repeated here.

In an embodiment, the processing module 30 is configured to determine the threshold value according to pre-definition in the protocol; or determine a threshold value candidate set according to pre-definition in the protocol and select the threshold value from the threshold value candidate set through RRC signaling; or determine a threshold value proportion according to pre-definition in the protocol or RRC signaling and calculate the threshold value according to a basic bit size of the second control information and the threshold value proportion.

In an embodiment, the processing module 30 is configured to acquire a target DCI sub-field from the second control information, where the target DCI sub-field is one DCI sub-field with a highest priority among current remaining DCI sub-fields; configure a state of the target DCI sub-field to be an independent indication, calculate a data size of the target DCI sub-field, and update a first bit size of the second control information according to the data size of the target DCI sub-field; determine whether the first bit size of the second control information is greater than the threshold value; in the case where the first bit size of the second control information is greater than the threshold value, modify the state of the target DCI sub-field to be a shared indication and update the first bit size of the second control information; in the case where the updated first bit size of the second control information is not greater than the threshold value, acquire a next target DCI sub-field and configure a state of the next target DCI sub-field to be the independent indication; in the case where the updated first bit size of the second control information is greater than the threshold value, configure states of the remaining DCI sub-fields to be shared indications; and in the case where the first bit size of the second control information is not greater than the threshold value, acquire the next target DCI sub-field and configure the state of the next target DCI sub-field to be the independent indication until the first bit size of the second control information is greater than the threshold value.

In an embodiment, the processing module 30 is configured to acquire a target DCI sub-field from the second control information, where the target DCI sub-field is one DCI sub-field with a highest priority among current remaining DCI sub-fields; configure a state of the target DCI sub-field to be an independent indication, calculate a data size of the target DCI sub-field, and update a first bit size of the second control information according to the data size of the target DCI sub-field; determine whether the first bit size of the second control information is not less than the threshold value; in the case where the first bit size of the second control information is not less than the threshold value, modify the state of the target DCI sub-field to be a shared indication and update the first bit size of the second control information; in the case where the updated first bit size of the second control information is less than the threshold value, acquire a next target DCI sub-field and configure a state of the next target DCI sub-field to be the independent indication; in the case where the updated first bit size of the second control information is not less than the threshold value, configure states of the remaining DCI sub-fields to be shared indications; and in the case where the first bit size of the second control information is less than the threshold value, acquire the next target DCI sub-field and configure the state of the next target DCI sub-field to be the independent indication until the first bit size of the second control information is not less than the threshold value.

In an embodiment, the processing module 30 is configured to acquire a target DCI sub-field from the second control information, where the target DCI sub-field is one DCI sub-field with a highest priority among current remaining DCI sub-fields; configure a state of the target DCI sub-field to be an independent indication, calculate a data size of the target DCI sub-field, and update a first bit size of the second control information according to the data size of the target DCI sub-field; determine whether the first bit size of the second control information is greater than the threshold value; in the case where the first bit size of the second control information is greater than the threshold value, modify the state of the target DCI sub-field to be a shared indication and update the first bit size of the second control information; in the case where the updated first bit size of the second control information is not greater than the threshold value, acquire a next target DCI sub-field and configure a state of the next target DCI sub-field to be the independent indication; in the case where the updated first bit size of the second control information is greater than the threshold value, discard a current DCI sub-field and the remaining DCI sub-fields; and in the case where the first bit size of the second control information is not greater than the threshold value, acquire the next target DCI sub-field and configure the state of the next target DCI sub-field to be the independent indication until the first bit size of the second control information is greater than the threshold value.

In an embodiment, the processing module 30 is configured to acquire a target DCI sub-field from the second control information, where the target DCI sub-field is one DCI sub-field with a highest priority among current remaining DCI sub-fields; configure a state of the target DCI sub-field to be an independent indication, calculate a data size of the target DCI sub-field, and update a first bit size of the second control information according to the data size of the target DCI sub-field; determine whether the first bit size of the second control information is not less than the threshold value; in the case where the first bit size of the second control information is not less than the threshold value, modify the state of the target DCI sub-field to be a shared indication and update the first bit size of the second control information; in the case where the updated first bit size of the second control information is less than the threshold value, acquire a next target DCI sub-field and configure a state of the next target DCI sub-field to be the independent indication; in the case where the updated first bit size of the second control information is not less than the threshold value, discard a current DCI sub-field and the remaining DCI sub-fields; and in the case where the first bit size of the second control information is less than the threshold value, acquire the next target DCI sub-field and configure the state of the next target DCI sub-field to be the independent indication until the first bit size of the second control information is not less than the threshold value.

In an embodiment, the processing module 30 is configured to determine a sum of data sizes of all DCI sub-fields in the second control information; and determine whether the sum of the data sizes of all the DCI sub-fields in the second control information is greater than the threshold value; in the case where the sum of the data sizes of all the DCI sub-fields in the second control information is greater than the threshold value, discard a DCI sub-field with a low priority in priority order until a sum of data sizes of remaining DCI sub-fields is not greater than the threshold value.

In an embodiment, the processing module 30 is configured to determine a sum of data sizes of all DCI sub-fields in the second control information; and determine whether the sum of the data sizes of all the DCI sub-fields in the second control information is not less than the threshold value; in the case where the sum of the data sizes of all the DCI sub-fields in the second control information is not less than the threshold value, discard a DCI sub-field with a low priority in priority order until a sum of data sizes of remaining DCI sub-fields is less than the threshold value.

In an embodiment, the processing module 30 is configured to determine a sum of data sizes of all DCI sub-fields in the second control information; and determine whether the sum of the data sizes of all the DCI sub-fields in the second control information is greater than the threshold value; in the case where the sum of the data sizes of all the DCI sub-fields in the second control information is greater than the threshold value, configure a state of a DCI sub-field with a low priority to be a shared indication in priority order and update the sum of the data sizes of all the DCI sub-fields until the updated sum of the data sizes of all the DCI sub-fields is not greater than the threshold value.

In an embodiment, the processing module 30 is configured to determine a sum of data sizes of all DCI sub-fields in the second control information; and determine whether the sum of the data sizes of all the DCI sub-fields in the second control information is not less than the threshold value; in the case where the sum of the data sizes of all the DCI sub-fields in the second control information is not less than the threshold value, configure a state of a DCI sub-field with a low priority to be a shared indication in priority order and update the sum of the data sizes of all the DCI sub-fields until the updated sum of the data sizes of all the DCI sub-fields is less than the threshold value.

In an embodiment, the processing module 30 is configured to determine states of all the DCI sub-fields to be independent indications according to pre-definition in the protocol and determine the sum of the data sizes of all the DCI sub-fields; or determine states of all the DCI sub-fields to be shared indications according to pre-definition in the protocol and determine the sum of the data sizes of all the DCI sub-fields; or determine a state of at least one of all the DCI sub-fields to be an independent indication and states of remaining DCI sub-fields to be the shared indications according to pre-definition in the protocol and determine the sum of the data sizes of all the DCI sub-fields; or determine a state of at least one of all the DCI sub-fields to be the independent indication and states of remaining DCI sub-fields to be the shared indications according to higher layer signaling and determine the sum of the data sizes of all the DCI sub-fields.

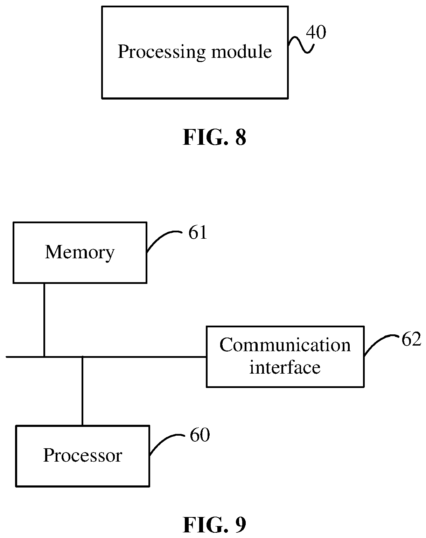

FIG. 8 is a structural diagram of a control signaling acquisition apparatus according to an embodiment. This apparatus may be configured in the access network device or the terminal device. As shown in FIG. 8, this apparatus includes a processing module 40.

The processing module 40 is configured to determine a scheduling mode of third control information, where the scheduling mode includes a mode in which the third control information schedules one cell or a mode in which the third control information schedules at least two cells.

The control signaling acquisition apparatus provided in this embodiment can perform the control signaling acquisition method of the embodiment shown in FIG. 4. The implementation principle and technical effects of the control signaling acquisition apparatus provided in this embodiment are similar to those of the preceding embodiments and are not repeated here.

In an embodiment, the processing module 40 is configured to determine the scheduling mode of the third control information through higher layer signaling; or determine the scheduling mode of the third control information through different RNTIs scrambled by a CRC.

An embodiment of the present application further provides a device. The device includes a processor, which is configured to, when executing a computer program, perform the method provided in any embodiment of the present application. Specifically, the device may be an access point device provided in any embodiment of the present application or may be a terminal device provided in any embodiment of the present application, which is not specifically limited in the present application.

Exemplarily, the following embodiments provide structural diagrams of devices that are a base station and a UE.

FIG. 9 is a structural diagram of a base station according to an embodiment. As shown in FIG. 9, the base station includes a processor 60, a memory 61, and a communication interface 62. One or more processors 60 may be provided in the base station, and one processor 60 is used as an example in FIG. 9. The processor 60, the memory 61, and the communication interface 62 that are in the base station may be connected through a bus or in other manners. In FIG. 9, the connection through the bus is used as an example. The bus represents one or more of several types of bus structures, including a memory bus or a memory controller, a peripheral bus, an Accelerated Graphics Port (AGP), a processor or a local bus using any bus structure among multiple bus structures.

As a computer-readable storage medium, the memory 61 may be configured to store software programs, computer-executable programs and modules, such as program instructions/modules corresponding to the method in the embodiments of the present application. The processor 60 executes the software programs, instructions and modules stored in the memory 61 to perform at least one function application and data processing of the base station, that is, to implement the control signaling transmission method or the control signaling acquisition method described above. The memory 61 may include a program storage region and a data storage region. The program storage region may store an operating system and an application program required by at least one function. The data storage region may store data created depending on the use of a terminal. Additionally, the memory 61 may include a high-speed random-access memory and may further include a non-volatile memory, for example, at least one magnetic disk memory and flash memory or other non-volatile solid-state memories. In some examples, the memory 61 may include memories that are remotely disposed with respect to the processor 60. These remote memories may be connected to the base station via a network. Examples of the preceding network include, but are not limited to, the Internet, an intranet, a network, a communication network and a combination thereof.

The communication interface 62 may be configured to receive and send data.

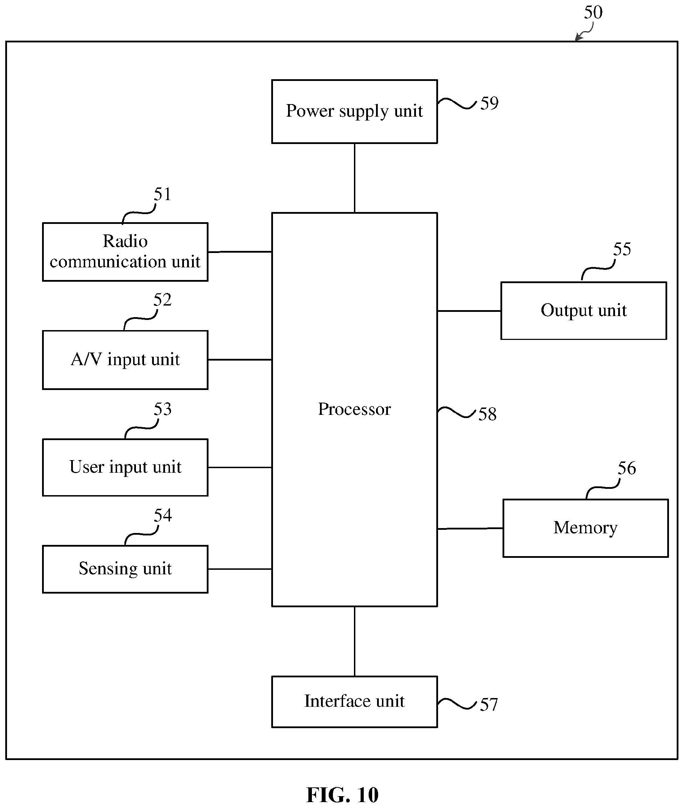

FIG. 10 is a structural diagram of a UE according to an embodiment. The UE may be implemented in multiple forms. The UE in the present application may include, but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal and a vehicle-mounted electronic rearview mirror and fixed terminal devices such as a digital television (TV) and a desktop computer.

As shown in FIG. 10, a UE 50 may include a radio communication unit 51, an audio/video (A/V) input unit 52, a user input unit 53, a sensing unit 54, an output unit 55, a memory 56, an interface unit 57, a processor 58 and a power supply unit 59. FIG. 10 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration and the like and generates commands or signals for controlling the operations of the UE 50. The interface unit 57 serves as an interface through which at least one external apparatus can be connected to the UE 50. The output unit 55 is configured to provide output signals in a visual, audio and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

The embodiments of the present application further provide a computer-readable storage medium. The computer-readable storage medium is configured to store a computer program which, when executed by a processor, implements the method provided by any one of the embodiments of the present application.

A computer storage medium in the embodiments of the present application may use any combination of one or more computer-readable media. A computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list): an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may further be any computer-readable medium other than the computer-readable storage medium. The computer-readable medium may send, propagate, or transmit the program used by or used in conjunction with the instruction execution system, apparatus, or element.

Program codes included on the computer-readable medium may be transmitted by using any suitable medium including, but not limited to, a radio medium, a wire, an optical cable, radio frequency (RF) and the like, or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on the user computer, as a stand-alone software package, partly on the user computer and partly on a remote computer, or entirely on the remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal covers any suitable type of wireless user devices, for example, a mobile phone, a portable data processing apparatus, a portable web browser, or a vehicle-mounted mobile station.

In general, multiple embodiments of the present application may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present application is not limited thereto.

The embodiments of the present application may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions or may represent a combination of program steps with logic circuits, modules, and functions. A computer program may be stored in a memory. The memory may be of any type suitable for a local technical environment and may be implemented using any suitable data storage technology. The memory may be, for example, but not limited to, a read-only memory (ROM), a random-access memory (RAM), an optical storage apparatus and system (digital video disk (DVD) or compact disc (CD)) or the like. Computer-readable media may include non-transitory storage media. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on a multi-core processor architecture.

**Claims**

1. A control signaling transmission method, comprising:
   sending, by a first communication node, first control information to a second communication node, wherein the first control information comprises at least one downlink control information, DCI, sub-field, and the at least one DCI sub-field comprises priority information.

2. The method of claim 1, wherein

   the priority information of the at least one DCI sub-field is determined by the first communication node according to a pre-definition in a protocol; or
   the priority information of the at least one DCI sub-field is configured by the first communication node according to radio resource control (RRC) signaling; or
   the priority information of the at least one DCI sub-field located in a same functional group is determined according to priority information of the functional group, wherein the priority information of the functional group is determined by the first communication node according to the pre-definition in the protocol; or

the priority information of the at least one DCI sub-field located in a same functional group is determined according to priority information of the functional group, wherein the priority information of the functional group is configured by the first communication node according to RRC signaling; or

the priority information of the at least one DCI sub-field located in a same functional group is configured by the first communication node according to RRC signaling, and priority information of the functional group is determined by the first communication node according to the pre-definition in the protocol.

3. The method of claim 1, wherein

the DCI sub-field not configured with the priority information has a highest priority; or
the DCI sub-field not configured with the priority information has a lowest priority.

4. A control signaling transmission method, comprising:
receiving, by a second communication node, first control information sent by a first communication node, wherein the first control information comprises at least one downlink control information, DCI, sub-field, and the at least one DCI sub-field comprises priority information.

5. The method of claim 4, wherein

the priority information of the at least one DCI sub-field is determined by the first communication node according to a pre-definition in the protocol; or
the priority information of the at least one DCI sub-field is configured by the first communication node according to radio resource control, RRC, signaling; or
the priority information of the at least one DCI sub-field located in a same functional group is determined according to priority information of the functional group, wherein the priority information of the functional group is determined by the first communication node according to the pre-definition in the protocol; or
the priority information of the at least one DCI sub-field located in a same functional group is determined according to priority information of the functional group, wherein the priority information of the functional group is configured by the first communication node according to RRC signaling; or
the priority information of the at least one DCI sub-field located in a same functional group is configured by the first communication node according to RRC signaling, and priority information of the functional group is determined by the first communication node according to the pre-definition in the protocol.

6. The method of claim 4, wherein

the DCI sub-field not configured with the priority information has a highest priority; or
the DCI sub-field not configured with the priority information has a lowest priority.

7. A control signaling transmission method, comprising:

determining, by a first communication node, a threshold value;
determining, by the first communication node, second control information according to the threshold value, wherein the second control information comprises at least one downlink control information, DCI, sub-field; and
sending, by the first communication node, the second control information to a second communication node.

8. The method of claim 7, wherein the determining, by the first communication node, the threshold value comprises:

determining, by the first communication node, the threshold value according to a pre-definition in the protocol; or
determining, by the first communication node, a threshold value candidate set according to the pre-definition in the protocol and selecting the threshold value from the threshold value candidate set through radio resource control, RRC, signaling; or
determining, by the first communication node, a threshold value proportion according to the pre-definition in the protocol or RRC signaling and calculating the threshold value according to a basic bit size of the second control information and the threshold value proportion.

9. The method of claim 7, wherein the determining, by the first communication node, the second control information according to the threshold value comprises:

acquiring, by the first communication node, a target DCI sub-field from the second control information, wherein the target DCI sub-field is one DCI sub-field with a highest priority among current remaining DCI sub-fields;

configuring, by the first communication node, a state of the target DCI sub-field to be an independent indication, calculating a data size of the target DCI sub-field, and updating a first bit size of the second control information according to the data size of the target DCI sub-field; and

determining, by the first communication node, whether the first bit size of the second control information is greater than the threshold value;

in a case where the first bit size of the second control information is greater than the threshold value, modifying, by the first communication node, the state of the target DCI sub-field to be a shared indication and updating the first bit size of the second control information; in a case where the updated first bit size of the second control information is not greater than the threshold value, acquiring, by the first communication node, a next target DCI sub-field and performing a step of configuring a state of the next target DCI sub-field to be the independent indication; and in a case where the updated first bit size of the second control information is greater than the threshold value, configuring, by the first communication node, states of the remaining DCI sub-fields to be shared indications; and

in a case where the first bit size of the second control information is not greater than the threshold value, acquiring, by the first communication node, the next target DCI sub-field and performing the step of configuring the state of the next target DCI sub-field to be the independent indication until the first bit size of the second control information is greater than the threshold value.

10. The method of claim 7, wherein the determining, by the first communication node, the second control information according to the threshold value comprises:

acquiring, by the first communication node, a target DCI sub-field from the second control information, wherein the target DCI sub-field is one DCI sub-field with a highest priority among current remaining DCI sub-fields;

configuring, by the first communication node, a state of the target DCI sub-field to be an independent indication, calculating a data size of the target DCI sub-field, and updating a first bit size of the second control information according to the data size of the target DCI sub-field; and

determining, by the first communication node, whether the first bit size of the second control information is not less than the threshold value;

in a case where the first bit size of the second control information is not less than the threshold value, modifying, by the first communication node, the state of the target DCI sub-field to be a shared indication and updating the first bit size of the second control information; in a case where the updated first bit size of the second control information is less than the threshold value, acquiring, by the first communication node, a next target DCI sub-field and performing a step of configuring a state of the next target DCI sub-field to be the independent indication; and in a case where the updated first bit size of the second control information is not less than the threshold value, configuring, by the first communication node, states of the remaining DCI sub-fields to be shared indications; and

in a case where the first bit size of the second control information is less than the threshold value, acquiring, by the first communication node, the next target DCI sub-field and performing the step of configuring the state of the next target DCI sub-field to be the independent indication until the first bit size of the second control information is not less than the threshold value.

11. The method of claim 7, wherein the determining, by the first communication node, the second control information according to the threshold value comprises:

acquiring, by the first communication node, a target DCI sub-field from the second control information, wherein the target DCI sub-field is one DCI sub-field with a highest priority among current remaining DCI sub-fields;

configuring, by the first communication node, a state of the target DCI sub-field to be an independent indication, calculating a data size of the target DCI sub-field, and updating a first bit size of the second control information according to the data size of the target DCI sub-field; and

determining, by the first communication node, whether the first bit size of the second control information is greater than the threshold value;

in a case where the first bit size of the second control information is greater than the threshold value, modifying, by the first communication node, the state of the target DCI sub-field to be a shared indication and updating the first bit size of the second control information; in a case where the updated first bit size of the second control information is not greater than the threshold value, acquiring, by the first communication node, a next target DCI sub-field and performing a step of configuring a state of the next target DCI sub-field to be the independent indication; and in a case where the updated first bit size of the second control information is greater than the threshold value, discarding, by the first communication node, a current DCI sub-field and the remaining DCI sub-fields; and

in a case where the first bit size of the second control information is not greater than the threshold value, acquiring, by the first communication node, the next target DCI sub-field and performing the step of configuring the state of the next target DCI sub-field to be the independent indication until the first bit size of the second control information is greater than the threshold value.

12. The method of claim 7, wherein determining, by the first communication node, the second control information according to the threshold value comprises:

acquiring, by the first communication node, a target DCI sub-field from the second control information, wherein the target DCI sub-field is one DCI sub-field with a highest priority among current remaining DCI sub-fields; configuring, by the first communication node, a state of the target DCI sub-field to be an independent indication, calculating a data size of the target DCI sub-field, and updating a first bit size of the second control information according to the data size of the target DCI sub-field; and

determining, by the first communication node, whether the first bit size of the second control information is not less than the threshold value;

in a case where the first bit size of the second control information is not less than the threshold value, modifying, by the first communication node, the state of the target DCI sub-field to be a shared indication and updating the first bit size of the second control information; in a case where the updated first bit size of the second control information is less than the threshold value, acquiring, by the first communication node, a next target DCI sub-field and performing a step of configuring a state of the next target DCI sub-field to be the independent indication; and in a case where the updated first bit size of the second control information is not less than the threshold value, discarding, by the first communication node, a current DCI sub-field and the remaining DCI sub-fields; and

in a case where the first bit size of the second control information is less than the threshold value, acquiring, by the first communication node, the next target DCI sub-field and performing the step of configuring the state of the next target DCI sub-field to be the independent indication until the first bit size of the second control information is not less than the threshold value.

13. The method of claim 7, wherein the determining, by the first communication node, the second control information according to the threshold value comprises:

determining, by the first communication node, a sum of data sizes of all DCI sub-fields in the second control information; and

determining, by the first communication node, whether the sum of the data sizes of all the DCI sub-fields in the second control information is greater than the threshold value;

in a case where the sum of the data sizes of all the DCI sub-fields in the second control information is greater than the threshold value, discarding, by the first communication node, a DCI sub-field with a low priority in priority order until a sum of data sizes of remaining DCI sub-fields is not greater than the threshold value.

14. The method of claim 7, wherein the determining, by the first communication node, the second control information according to the threshold value comprises:

determining, by the first communication node, a sum of data sizes of all DCI sub-fields in the second control information; and

determining, by the first communication node, whether the sum of the data sizes of all the DCI sub-fields in the second control information is not less than the threshold value;

in a case where the sum of the data sizes of all the DCI sub-fields in the second control information is not less than the threshold value, discarding, by the first communication node, a DCI sub-field with a low priority in priority order until a sum of data sizes of remaining DCI sub-fields is less than the threshold value.

15. The method of claim 7, wherein the determining, by the first communication node, the second control information according to the threshold value comprises:

determining, by the first communication node, a sum of data sizes of all DCI sub-fields in the second control information; and

determining, by the first communication node, whether the sum of the data sizes of all the DCI sub-fields in the second control information is greater than the threshold value;

in a case where the sum of the data sizes of all the DCI sub-fields in the second control information is greater than the threshold value, configuring, by the first communication node, a state of a DCI sub-field with a low priority to be a shared indication in priority order and updating the sum of the data sizes of all the DCI sub-fields until the updated sum of the data sizes of all the DCI sub-fields is not greater than the threshold value.

16. The method of claim 7, wherein the determining, by the first communication node, the second control information according to the threshold value comprises:

determining, by the first communication node, a sum of data sizes of all DCI sub-fields in the second control information; and

determining, by the first communication node, whether the sum of the data sizes of all the DCI sub-fields in the second control information is not less than the threshold value;

in a case where the sum of the data sizes of all the DCI sub-fields in the second control information is not less than the threshold value, configuring, by the first communication node, a state of a DCI sub-field with a low priority to be a shared indication in priority order and updating the sum of the data sizes of all the DCI sub-fields until the updated sum of the data sizes of all the DCI sub-fields is less than the threshold value.

17. The method of any one of claims 13 to 16, wherein determining, by the first communication node, the sum of the data sizes of all the DCI sub-fields in the second control information comprises:

determining, by the first communication node, states of all the DCI sub-fields to be independent indications according to the pre-definition in the protocol and determining the sum of the data sizes of all the DCI sub-fields; or

determining, by the first communication node, states of all the DCI sub-fields to be shared indications according to the pre-definition in the protocol and determining the sum of the data sizes of all the DCI sub-fields; or

determining, by the first communication node, a state of at least one of all the DCI sub-fields to be an independent indication and states of remaining DCI sub-fields to be the shared indications according to the pre-definition in the protocol and determining the sum of the data sizes of all the DCI sub-fields; or

determining, by the first communication node, a state of at least one of all the DCI sub-fields to be the independent indication and states of remaining DCI sub-fields to be the shared indications according to higher layer signaling and determining the sum of the data sizes of all the DCI sub-fields.

18. A control signaling acquisition method, comprising:
determining, by a third communication node, a scheduling mode of third control information, wherein the scheduling mode comprises a mode in which the third control information schedules one cell or a mode in which the third control information schedules at least two cells.

19. The method of claim 18, wherein the determining, by the third communication node, the scheduling mode of the third control information comprises:

determining, by the third communication node, the scheduling mode of the third control information through higher layer signaling; or

determining, by the third communication node, the scheduling mode of the third control information through different radio network temporary identities, RNTIs, scrambled by a cyclic redundancy check, CRC.

20. A device, comprising: a processor;

wherein the processor is configured to perform the control signaling transmission method of any one of claims 1 to 3 when executing a computer program; or

the processor is configured to perform the control signaling transmission method of any one of claims 4 to 6 when executing a computer program; or

the processor is configured to perform the control signaling transmission method of any one of claims 7 to 17 when executing a computer program; or

the processor is configured to perform the control signaling acquisition method of claim 18 or 19 when executing a computer program.

21. A computer-readable storage medium storing a computer program, wherein the computer program, when executed by a processor, causes the processor to perform the control signaling transmission method of any one of claims 1

**EP 4 195 843 A1**

to 3, perform the control signaling transmission method of any one of claims 4 to 6, perform the control signaling transmission method of any one of claims 7 to 17, or perform the control signaling acquisition method of claim 18 or 19.

**32**

A first communication node sends first control information to a second communication node, where the first control information includes at least one downlink control information (DCI) sub-field, and the at least one DCI sub-field includes priority information — S110

**FIG. 1**

A second communication node receives first control information sent by a first communication node, where the first control information includes at least one downlink control information (DCI) sub-field, and the at least one DCI sub-field includes priority information — S210

**FIG. 2**

A first communication node determines a threshold value — S310

The first communication node determines second control information according to the threshold value, where the second control information includes at least one downlink control information (DCI) sub-field — S320

The first communication node sends the second control information to a second communication node — S330

**FIG. 3**

A third communication node determines a scheduling mode of third control information, where the scheduling mode includes a mode in which the third control information schedules one cell or a mode in which the third control information schedules at least two cells

S410

**FIG. 4**

Communication module

10

**FIG. 5**

Communication module

20

**FIG. 6**

Processing module

30

Communication module

31

**FIG. 7**

Processing module 40

**FIG. 8**

Memory 61

Communication interface 62

Processor 60

**FIG. 9**

**FIG. 10**

## INTERNATIONAL SEARCH REPORT

| International application No. |
|---|
| **PCT/CN2021/110037** |

**A. CLASSIFICATION OF SUBJECT MATTER**

H04W 72/12(2009.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 下行, 控制, 信息, 域, 字段, 优先, 等级, 级别, 组, 多, 至少, 以上, 复数, 门限, 阈值, 尺寸, 大小, 长度, 小区, 共享, 公用, 公共, DCI, field, segment, prior+, preemption, grade, class, group, multi+, at least, more than, several, threshold, size, length, cell, share, public, common

**C. DOCUMENTS CONSIDERED TO BE RELEVANT**

| Category* | Citation of document, with indication, where appropriate, of the relevant passages | Relevant to claim No. |
|---|---|---|
| PX | CN 111935844 A (ZTE CORPORATION) 13 November 2020 (2020-11-13)<br>claims 1-17, 20-21 | 1-17, 20, 21 |
| X | CN 102469609 A (HUAWEI TECHNOLOGIES CO., LTD.) 23 May 2012 (2012-05-23)<br>description paragraphs [0017]-[0031], [0040]-[0070], [0121] | 1-6, 20-21 |
| X | WO 2018144641 A1 (INTEL IP CORPORATION) 09 August 2018 (2018-08-09)<br>description, abstract | 7, 20, 21 |
| A | WO 2018144641 A1 (INTEL IP CORPORATION) 09 August 2018 (2018-08-09)<br>description, abstract | 8-17 |
| A | CN 111245586 A (BEIJING UNISOC COMMUNICATION TECHNOLOGY CO., LTD.) 05 June 2020 (2020-06-05)<br>entire document | 1-17, 20, 21 |
| A | ERICSSON. "Summary of 7.1.3.1 (DCI contents and formats)"<br>*"TSG-RAN WG1 #94bis R1-1812066"*, 12 October 2018 (2018-10-12),<br>entire document | 1-17, 20, 21 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2021** | **04 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/110037** |

| Box No. III | Observations where unity of invention is lacking (Continuation of item 3 of first sheet) |
|---|---|

This International Searching Authority found multiple inventions in this international application, as follows:

[1]  The first group of claims 1, 4, 7 and 20-21 relate to a control signaling transmission method for sending control messages.

[2]  The second group of claims 18, 19 and 20-21 relate to a control signaling acquisition method for determining the scheduling mode of control messages.

[3]  Claims 20-21 referring to claims 1-17 and claims 18-19 belong to the first group and the second group of claims, respectively.

[4]  There are no the same or corresponding technical features between the above-mentioned two groups of claims, and thus the above-mentioned two groups of claims are not mutually linked by means of the same or corresponding specific technical features. They define two different inventions, and these inventions are not mutually linked by means of a general inventive concept. Therefore, the present application lacks unity of invention under PCT Rule 13.1 and 13.2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-17,20-21**

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (patent family annex) (January 2015)

**INTERNATIONAL SEARCH REPORT**
Information on patent family members

International application No.

**PCT/CN2021/110037**

| Patent document cited in search report | | | Publication date (day/month/year) | Patent family member(s) | | | Publication date (day/month/year) |
|---|---|---|---|---|---|---|---|
| CN | 111935844 | A | 13 November 2020 | None | | | |
| CN | 102469609 | A | 23 May 2012 | CN | 105578599 | A | 11 May 2016 |
| | | | | US | 2013250893 | A1 | 26 September 2013 |
| | | | | WO | 2011144131 | A1 | 24 November 2011 |
| | | | | US | 2018131494 | A1 | 10 May 2018 |
| | | | | US | 2016191222 | A1 | 30 June 2016 |
| WO | 2018144641 | A1 | 09 August 2018 | EP | 3577986 | A1 | 11 December 2019 |
| | | | | US | 2021112528 | A1 | 15 April 2021 |
| CN | 111245586 | A | 05 June 2020 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010790886X